# EUROPEAN PATENT SPECIFICATION

(11) **EP 3 767 982 B1**
(45) Date of publication and mention of the grant of the patent: **25.09.2024**
(21) Application number: 19784519.1
(22) Date of filing: 08.04.2019
(51) Int. Cl.: H04W 12/069, H04W 12/72

(54) **COMMUNICATION METHOD AND APPARATUS**
KOMMUNIKATIONSVERFAHREN UND -VORRICHTUNG
PROCÉDÉ ET APPAREIL DE COMMUNICATION

(30) Priority: 08.04.2018 CN 201810308401
(43) Date of publication of application: 20.01.2021
(73) Proprietor: Huawei Technologies Co., Ltd., Longgang Shenzhen, Guangdong 518129 (CN)
(72) Inventor: LI, Huan, Shenzhen, Guangdong 518129 (CN); JIN, Weisheng, Shenzhen, Guangdong 518129 (CN); LI, He, Shenzhen, Guangdong 518129 (CN)
(74) Representative: Gill Jennings & Every LLP
(86) International application number: PCT/CN2019/081678
(87) International publication number: WO 2019/196766

(56) References cited:
- WO-A1-2017/157331
- WO-A1-2018/016927
- CN-A- 107 205 264
- CN-A- 107 580 324
- US-A1- 2018 063 701
- US-A1- 2019 090 166
- 3GPP TSG SA WG3: "Study on the security aspects of the next generation system (Release 14)", 3GPP TR 33.899, V1.3.0., 1 August 2017 (2017-08-01), XP055649696
- HUAWEI: "TS 23.501: Selection of a Target AMF Supporting the Ne- twork Slices Due to UE Mobility", SA WG2 MEETING #124 , S2-178399, 21 November 2017 (2017-11-21), XP051379428

## Description

### TECHNICAL FIELD

This application relates to the communications field, and more specifically, to a communications method and apparatus in the communications field.

### BACKGROUND

The 3rd Generation Partnership Project (3rd Generation Partnership Project, 3GPP) has released a next generation mobile communications network architecture (Next Generation System), which is also referred to as a fifth generation (5G) network architecture. In addition, a neutral host network (Neutral Host Network, NHN) is also evolving.

With continuous development of network architectures, there will be increasing requirements for interaction between the two network architectures in the future. Therefore, how to enable a terminal device to access a 5G communications network through a neutral host network (Neutral Host Network, NHN) is an urgent problem to be resolved.

3GPP TSG SA WG3, "Study on the security aspects of the next generation system (Release 14)", 3GPP TR 33.899, V1.3.0. relates to security aspects of the next generation system.

### SUMMARY

This application provides a communications method and an apparatus, so that a terminal device can access a 5G communications network through an NHN network.

According to a first aspect, a communications method is provided, including:
receiving, by a first access and mobility management function network element in a first communications network, a first message from the terminal device, where the first message includes a non-access stratum NAS parameter used by the terminal device to access a second communications network;
sending, by the first access and mobility management function network element, a second message to a second access and mobility management function network element in the second communications network, where the second message includes the NAS parameter.

Therefore, the first access and mobility management function network element in the first communications network receives the NAS parameter used by the terminal device to access the second communications network and sends the NAS parameter to the second access and mobility management function network element in the second communications network, so that the terminal device can access, based on the NAS parameter, the second communications network through the first access and mobility management function network element in the first communications network.

Optionally, the first communications network may be an NH network, and the first mobility management function network element may be an NH AMF network element in the NH network. The second communications network may be a 5G communications network, the second mobility management function network element is an AMF network element on a 5G control plane, and the terminal device may be UE. This is not specifically limited in this embodiment of this application.

Optionally, the first message may include first indication information, and the first indication information is used to indicate to access the second communications network. Specifically, the first indication information may be an identifier (ID) of the terminal device, for example, a permanent identity (SUPI) of a user or a temporary identity (GUTI) of a user, or may be an independent indication. This is not limited in this embodiment of this application. In this way, the first access and mobility management function network element may determine, based on the indication information that the terminal device needs to access the second communications network.

In some possible implementations of the first aspect, the first message further includes security capability information of the terminal device.

In some possible implementations of the first aspect, the security capability information includes a security capability applied to the first communications network.

In some possible implementations of the first aspect, the second message further includes a network identifier and/or an access type of the first communications network.

In a possible implementation, the second message may include an access network (Access network, AN) parameter, and the AN parameter may include the network indicator or the access type.

Optionally, in this embodiment of this application, the second message may include security capability information that is of the first communications network and that is supported by the terminal device.

In some possible implementations of the first aspect, if authentication between an authentication server in the second communications network and the terminal device succeeds, the method further includes:
performing, by the first access and mobility management function network element, security protection on a first security mode command based on a key of the first communications network, where the first security mode command is used to enable security protection for message exchange between the terminal device and the first communications network; and
sending, by the first access and mobility management function network element to the terminal device, the first security mode command on which the security protection is performed.

In some possible implementations of the first aspect, before the performing, by the first access and mobility management function network element, security protection on a first security mode command based on a key of the first communications network, the method further includes:
receiving, by the first access and mobility management function network element, at least one of the following information from the second access and mobility management function network element or a security function entity:
the key;
a parameter used to generate the key; and
a base key used to generate the key.

In some possible implementations of the first aspect, the method further includes: generating, by the first access and mobility management function network element, the key based on the parameter used to generate the key and/or the base key used to generate the key.

Optionally, the first access and mobility management function network element may generate the key according to a method agreed upon with the terminal device in advance. Specifically, for the agreed method, refer to a key generation method in the prior art. Details are not described in this embodiment of this application.

Alternatively, when the first access and mobility management function network element does not receive the key, the parameter used to generate the key, or the base key used to generate the key, the first access and mobility management function network element may request the key from the second access and mobility management function network element.

In some possible implementations of the first aspect, the method further includes: sending, by the first access and mobility management function network element to the terminal device, the parameter used to generate the key.

In some possible implementations of the first aspect, the method further includes: receiving, by the first access and mobility management function network element, a first SMP from the terminal device, where the first SMP is generated by the terminal device in response to the first security mode command after the terminal device successfully verifies the first security mode command.

In some possible implementations of the first aspect, the first SMP is security protected in a manner corresponding to a protection method of the first security mode command.

In some possible implementations of the first aspect, the method further includes:
receiving, by the first access and mobility management function network element, a second security mode command from the second access and mobility management function network element, and sending the second security mode command to the terminal device, where the second security mode command is used to enable security protection for message exchange between the terminal device and the second communications network.

In some possible implementations of the first aspect, the first access and mobility management function network element sends the first security mode command and the second security mode command to the terminal device at the same time;
the first access and mobility management function network element sends the first security mode command to the terminal device after sending the second security mode command to the terminal device; or
the first access and mobility management function network element sends the second security mode command to the terminal device after sending the first security mode command to the terminal device.

In an example, the NH AMF may send an N1-N message to the UE, and the N1-N message includes SMC #1 and SMC #2. In this case, in the N1-N message, the SMC #1 may be nested in the SMC #2, or the SMC #1 and the SMC #2 may be two parallel messages. This is not specifically limited in this embodiment of this application.

In another example, after receiving the SMC #1 from the AMF, the NH AMF encapsulates the SMC #1 into an N1-N message #1, and sends the N1-N message #1 to the UE. Then, the NH AMF encapsulates an SMC, obtained after security protection is performed on the SMC #2 based on the NH-Kamf, in an N1-N message #2 and sends the N1-N message #2 to the UE.

In another example, after receiving the SMC #1 from the AMF, the NH AMF first stores the SMC #1. The NH AMF first encapsulates an SMC, obtained after security protection is performed on the SMC #2 based on the NH-Kamf, in an N1-N message #2 and sends the N1-N message #2 to the UE, then encapsulates the SMC #1 in an N1-N message #1 and sends the N1-N message #1 to the UE.

In some possible implementations of the first aspect, the method further includes: receiving, by the first access and mobility management function network element, a second SMP from the terminal device, where the second SMP is a message generated by the terminal device in response to the second security mode command after the terminal device successfully verifies the second security mode command.

Optionally, in this embodiment of this application, NAS encryption may be performed only between the terminal device and the first access and mobility management function network element. In this case, in a possible implementation, the second access and mobility management function network element sends the SMC #1 to the terminal device through the first access and mobility management function network element, where the SMC #1 includes an indication indicating that a NAS key does not need to be negotiated between the terminal device and the second access and mobility management function network element.. In this way, security protection may not need to be performed on a subsequent NAS message between the terminal device and the second access and mobility management function network element.

Alternatively, in another possible implementation, the second access and mobility management function network element may not send the SMC #1, but send a NAS registration accept message to the first access and mobility management function network element, to trigger the first access and mobility management function network element to send the SMC #2 to the terminal device.

Alternatively, in another possible implementation, the second access and mobility management function network element sends an N2 message or an N14 message (or invokes an N14 service), to trigger the first access and mobility management function network element to send the SMC #2 to the terminal device.

In some possible implementations of the first aspect, the method further includes:
receiving, by the first access and mobility management function network element, a third message from the second access and mobility management function network element, and sending a fourth message to the terminal device, where the third message and the fourth message each include a parameter used by the terminal device to authenticate the second communications network; and
receiving, by the first access and mobility management function network element, a response message of the fourth message from the terminal device, and sending a response message of the third message to the second access and mobility management function network element, where the response message of the third message and the response message of the fourth message each include a parameter used by a network element in the second communications network to authenticate the terminal device.

According to a second aspect, a communications method is provided, including:
sending, by a terminal device, a first message to a first access and mobility management function network element in a first communications network, where the first message includes a non-access stratum NAS parameter used by the terminal device to access a second communications network.

Therefore, the first access and mobility management function network element in the first communications network receives the NAS parameter used by the terminal device to access the second communications network and sends the NAS parameter to the second access and mobility management function network element in the second communications network, so that the terminal device can access the second communications network through the first access and mobility management function network element in the first communications network based on the NAS parameter.

Optionally, the first communications network may be an NH network, and the first mobility management function network element may be an NH AMF network element in the NH network. The second communications network may be a 5G communications network, the second mobility management function network element is an AMF network element on a 5G control plane, and the terminal device may be UE. This is not specifically limited in this embodiment of this application.

Optionally, the first message may include first indication information used to indicate to access the second communications network. Specifically, the first indication information may be an identifier (ID) of the terminal device, for example, a permanent identity (SUPI) of a user, a temporary identity (GUTI) of a user, or may be an independent indication. This is not limited in this embodiment of this application. In this way, the first access and mobility management function network element may determine, based on the indication information, that the terminal device needs to access the second communications network.

In some possible implementations of the second aspect, the first message further includes security capability information of the terminal device.

In some possible implementations of the second aspect, the security capability information includes a security capability applied to the first communications network.

In some possible implementations of the second aspect, if authentication between an authentication server in the second communications network and the terminal device succeeds, the method further includes:
receiving, by the terminal device, a first security mode command from the first access and mobility management function network element, where the first security mode command is used to enable security protection for message exchange between the terminal device and the first communications network, and the first security mode command is used to perform security protection by using a key of the first communications network.

In some possible implementations of the second aspect, the method further includes: receiving, by the terminal device from the first access and mobility management function network element, a parameter used to generate the key.

In some possible implementations of the second aspect, the method further includes: sending, by the terminal device, a first SMP from the first access and mobility management function network element, where the first SMP is a message generated by the terminal device response to the first security mode command after the terminal device successfully verifies the first security mode command.

In some possible implementations of the second aspect, the first SMP is security protected in a manner corresponding to a protection method of the first security mode command.

In some possible implementations of the second aspect, the method further includes: receiving, by the terminal device, a second security mode command from the first access and mobility management function network element, where the second security mode command is received by the first access and mobility management function network element from the second access and mobility management function network element, and the second security mode command is used to enable security protection for message exchange between the terminal device and the second communications network.

In some possible implementations of the second aspect, the terminal device receives the first security mode command and the second security mode command from the first access and mobility management function network element at the same time;
the terminal device receives the first security mode command from the first access and mobility management function network element after receiving the second security mode command from the first access and mobility management function network element; or
the terminal device receives the second security mode command from the first access and mobility management function network element after receiving the first security mode command from the first access and mobility management function network element.

In an example, the NH AMF may send an N1-N message to the UE, and the N1-N message includes SMC #1 and SMC #2. In this case, in the N1-N message, the SMC #1 may be nested in the SMC #2, or the SMC #1 and the SMC #2 may be two parallel messages. This is not specifically limited in this embodiment of this application.

In another example, after receiving the SMC #1 from the AMF, the NH AMF encapsulates the SMC #1 into an N1-N message #1, and sends the N1-N message #1 to the UE. Then, the NH AMF encapsulates an SMC, obtained after security protection is performed on the SMC #2 based on the NH-Kamf, in an N1-N message #2 and sends the N1-N message #2 to the UE.

In another example, after receiving the SMC #1 from the AMF, the NH AMF first stores the SMC #1. The NH AMF first encapsulates an SMC, obtained after security protection is performed on the SMC #2 based on the NH-Kamf, in an N1-N message #2 and sends the N1-N message #2 to the UE, and then encapsulates the SMC #1 in an N1-N message #1 and sends the N1-N message #1 to the UE.

In some possible implementations of the second aspect, the method further includes: sending, by the terminal device, a second SMP to the first access and mobility management function network element, where the second SMP is a message generated by the terminal device in response to the second security mode command after the terminal device successfully verifies the second security mode command.

Optionally, in this embodiment of this application, NAS encryption may be performed only between the terminal device and the first access and mobility management function network element. In this case, in a possible implementation, the second access and mobility management function network element sends the SMC #1 to the terminal device through the first access and mobility management function network element, where the SMC #1 includes an indication indicating that a NAS key does not need to be negotiated between the terminal device and the second access and mobility management function network element. In this way, security protection may not need to be performed on a subsequent NAS message between the terminal device and the second access and mobility management function network element.

Alternatively, in another possible implementation, the second access and mobility management function network element may not send the SMC #1, but send a NAS registration accept message to the first access and mobility management function network element, to trigger the first access and mobility management function network element to send the SMC #2 to the terminal device.

Alternatively, in another possible implementation, the second access and mobility management function network element sends an N2 message or an N14 message (or invokes an N14 service), to trigger the first access and mobility management function network element to send the SMC #2 to the terminal device.

In some possible implementations of the second aspect, the method further includes:
receiving, by the terminal device, a fourth message from the first access and mobility management function network element, where the fourth message includes a parameter used by the terminal device to authenticate the second communications network; and
sending, by the terminal device, a response message of the fourth message to the first access and mobility management function network element, where the response message of the fourth message includes a parameter used by the network element in the second communications network to authenticate the terminal device.

According to a third aspect, a communications method is provided, including:
receiving, by a second access and mobility management function network element in a second communications network, a second message from a first access and mobility management function network element in a first communications network, where the second message includes a non-access stratum NAS parameter used by a terminal device to access the second communications network; and
processing, by the second access and mobility management function network element, the second message.

Therefore, the first access and mobility management function network element in the first communications network receives the NAS parameter used by the terminal device to access the second communications network and sends the NAS parameter to the second access and mobility management function network element in the second communications network, so that the terminal device can access the second communications network through the first access and mobility management function network element in the first communications network based on the NAS parameter.

Optionally, the first communications network may be an NH network, and the first mobility management function network element may be an NH AMF network element in the NH network. The second communications network may be a 5G communications network, the second mobility management function network element is an AMF network element on a 5G control plane, and the terminal device may be UE. This is not specifically limited in this embodiment of this application.

Optionally, the first message may include first indication information used to indicate to access the second communications network. Specifically, the first indication information may be an identifier (ID) of the terminal device, for example, a permanent identity (SUPI) of a user, a temporary identity (GUTI) of a user, or may be an independent indication. This is not limited in this embodiment of this application. In this way, the first access and mobility management function network element may determine, based on the indication information that the terminal device needs to access the second communications network.

In some possible implementations of the third aspect, the second message further includes a network identifier and/or an access type of the first communications network.

In a possible implementation, the second message may include an access network (Access network, AN) parameter, and the AN parameter may include the network indicator or the access type.

Optionally, in this embodiment of this application, the second message may include security capability information that is of the first communications network and that is supported by the terminal device.

In some possible implementations of the third aspect, the method further includes: sending, by the second access and mobility management function network element, a terminal authentication request to an authentication server in the second communications network based on the second message; and
receiving, by the second access and mobility management function network element, a terminal authentication response that corresponds to the terminal authentication request and that is sent by the authentication server, where the terminal authentication response includes a result of authentication between the authentication server and the terminal device.

Optionally, the terminal authentication request may include the AN parameter in the foregoing description.

In some possible implementations of the third aspect, the method further includes: receiving, by the second access and mobility management function network element, an authentication challenge message from the authentication server, where the authentication challenge message includes a parameter used by the terminal device to authenticate the second communications network; and
sending, by the second access and mobility management function network element, a third message to the first access and mobility management function network element, where the third message includes a parameter used by the terminal device to authenticate the second communications network.

In some possible implementations of the third aspect, the method further includes: receiving, by the second access and mobility management function network element, a response message of the third message from the first access and mobility management function network element, where the response message of the third message includes a parameter used by the network element in the second communications network to authenticate the terminal device; and
sending, by the second access and mobility management function network element, a response message corresponding to the authentication challenge message to the authentication server, where the response message of the authentication challenge message includes the parameter used by the network element in the second communications network to authenticate the terminal device.

In some possible implementations of the third aspect, if authentication between the authentication server in a second communications network and the terminal device succeeds, the method further includes:
receiving, by the second access and mobility management function network element, at least one of the following information sent by the authentication server:
a key of the first communications network;
a parameter used to generate the key; and
a base key used to generate the key.

In some possible implementations of the third aspect, if authentication between the authentication server and the terminal device succeeds, the method further includes:
sending, by the second access and mobility management function network element, at least one of the following information to the first access and mobility management function network element:
a key of the first communications network;
a parameter used to generate the key; and
the base key used to generate the key.

In some possible implementations of the third aspect, the method further includes:
sending, by the second access and mobility management function network element, a second security mode command to the first access and mobility management function network element, where the second security mode command is used to enable security protection for message exchange between the terminal device and the second communications network.

In an example, the NH AMF may send an N1-N message to UE, and the N1-N message includes SMC #1 and SMC #2. In this case, in the N1-N message, the SMC #1 may be nested in the SMC #2, or the SMC #1 and the SMC #2 may be two parallel messages. This is not specifically limited in this embodiment of this application.

In another example, after receiving the SMC #1 from the AMF, the NH AMF encapsulates the SMC #1 into an N1-N message #1, and sends the N1-N message #1 to the UE. Then, the NH AMF encapsulates an SMC, obtained after security protection is performed on the SMC #2 based on the NH-Kamf, in an N1-N message #2 and sends the N1-N message #2 to the UE.

In another example, after receiving the SMC #1 from the AMF, the NH AMF first stores the SMC #1. The NH AMF first encapsulates an SMC, obtained after security protection is performed on the SMC #2 based on the NH-Kamf, in an N1-N message #2 and sends the N1-N message #2 to the UE, and then encapsulates the SMC #1 in an N1-N message #1 and sends the N1-N message #1 to the UE.

In some possible implementations of the third aspect, the method further includes:
receiving, by the second access and mobility management function network element, a second SMP from the first access and mobility management function network element, where the second SMP is a message generated by the terminal device in response to the second security mode command after the terminal device successfully verifies the second security mode command.

Optionally, in this embodiment of this application, NAS encryption may be performed only between the terminal device and the first access and mobility management function network element. In this case, in a possible implementation, the second access and mobility management function network element sends the SMC #1 to the terminal device through the first access and mobility management function network element, where the SMC #1 includes an indication indicating that a NAS key does not need to be negotiated between the terminal device and the second access and mobility management function network element. In this way, security protection may not need to be performed on a subsequent NAS message between the terminal device and the second access and mobility management function network element.

Alternatively, in another possible implementation, the second access and mobility management function network element may not send the SMC #1, but send a NAS registration accept message to the first access and mobility management function network element, to trigger the first access and mobility management function network element to send the SMC #2 to the terminal device.

Alternatively, in another possible implementation, the second access and mobility management function network element sends an N2 message or an N14 message (or invokes an N14 service), to trigger the first access and mobility management function network element to send the SMC #2 to the terminal device.

According to a fourth aspect, a communications apparatus is provided. The apparatus is configured to perform the method according to any one of the foregoing aspects or any possible implementation of any one of the foregoing aspects. Specifically, the communications apparatus includes a unit configured to perform the method according to any one of the foregoing aspects or any possible implementation of any one of the foregoing aspects.

According to a fifth aspect, a communications apparatus is provided, where the apparatus includes a transceiver, a memory, a processor, and a bus system. The transceiver, the memory, and the processor are connected through the bus system. The memory is configured to store an instruction. The processor is configured to execute the instruction stored in the memory, to control the transceiver to receive and/or send a signal. When the processor executes the instruction stored in the memory, the execution enables the processor to perform the method according to any one of the foregoing aspects or any possible implementation of any one of the foregoing aspects.

According to a sixth aspect, a computer-readable medium is provided and is configured to store a computer program. The computer program includes an instruction for performing the method according to any possible implementation of any one of the foregoing aspects.

According to a seventh aspect, a computer program product is provided. The computer program product includes computer program code. When the computer program code is run by a communications unit, a processing unit, a transceiver, and a processor of a communications device (for example, a terminal device or a network device), the communications device is enabled to perform the method according to any possible implementation of any one of the foregoing aspects.

According to an eighth aspect, a communications chip is provided. The communications chip stores an instruction, and when the instruction is run on a wireless communications apparatus, the communications chip is enabled to perform the method according to any possible implementation of any one of the foregoing aspects.

Therefore, in the embodiments of this application, the first access and mobility management function network element in the first communications network receives the NAS parameter used by the terminal device to access the second communications network, and sends the NAS parameter to the second access and mobility management function network element in the second communications network, so that a core network in the second communications network completes the process of accessing the second communications network by the terminal device based on the NAS parameter. Therefore, in the embodiments of this application, the terminal device can access the second communications network through the first access and mobility management function network element in the first communications network.

### BRIEF DESCRIPTION OF DRAWINGS

FIG. 1 is a schematic diagram of a system architecture 100 applicable to an embodiment of this application.
FIG. 2 is a schematic diagram of an application scenario 200 according to an embodiment of this application.
FIG. 3 is a schematic flowchart of a communication method according to an embodiment of this application.
FIG. 4A to FIG. 4C are a schematic flowchart of another communication method according to an embodiment of this application.
FIG. 5 shows a schematic block diagram of a communications apparatus according to an embodiment of this application.
FIG. 6 is a schematic block diagram of another communications apparatus according to an embodiment of this application.
FIG. 7 is a schematic block diagram of another communications apparatus according to an embodiment of this application;
FIG. 8 is a schematic block diagram of another communications apparatus according to an embodiment of this application.

### DESCRIPTION OF EMBODIMENTS

The following describes technical solutions of this application with reference to accompanying drawings.

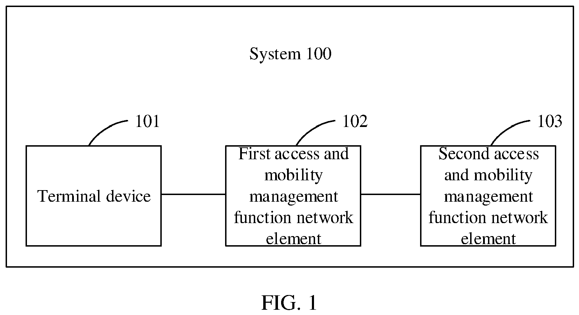

FIG. 1 is a schematic diagram of a system architecture 100 to which an embodiment of this application is applied. As shown in FIG. 1, the system architecture 100 includes a terminal device 101, a first access and mobility management function network element 102, and a second access and mobility management function network element 103. Specifically, the first access and mobility management function network element 102 is a network element in the first communications network, and the second access and mobility management function network element 103 is a network element in a second communications network.

The system architecture 100 may be configured to perform the communications method in the embodiments of this application.

In a possible implementation, the terminal device 101 is configured to send a first message from the first access and mobility management function network element 102 in the first communications network, where the first message includes a non-access stratum NAS parameter used by the terminal device to access the second communications network.

The first access and mobility management function network element 102 is configured to: receive the first message from the terminal device 101, where the first message includes the non-access stratum NAS parameter used by the terminal device to access the second communications network. The first access and mobility management function network element 102 sends a second message to the second access and mobility management function network element 103 in the second communications network, where the second message includes the NAS parameter.

The first access and mobility management function network element 103 is configured to receive the second message from the first access and mobility management function network element in the first communications network, where the second message includes the non-access stratum NAS parameter used by the terminal device 101 to access the second communications network.

Therefore, in the system architecture 100, the first access and mobility management function network element in the first communications network receives the NAS parameter used by the terminal device to access the second communications network and sends the NAS parameter to the second access and mobility management function network element in the second communications network, so that the terminal device can access the second communications network through the first access and mobility management function network element in the first communications network based on the NAS parameter.

Optionally, the access and mobility management function network element in the system architecture 100 may be implemented by one device, or may be jointly implemented by a plurality of devices, or may be a functional module in one device. This is not specifically limited in the embodiments of this application. It may be understood that the foregoing function may be a network element in a hardware device, or may be a software function running on dedicated hardware, or may be a virtualization function instantiated on a platform (for example, a cloud platform). This is not limited in the embodiments of this application.

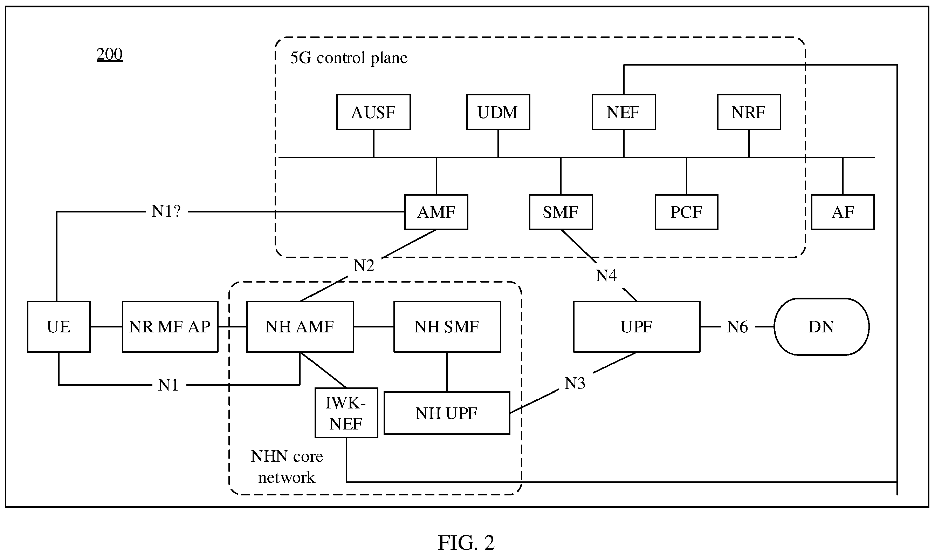

FIG. 2 is a schematic diagram of an application scenario 200 according to an embodiment of this application. In the application scenario 200, a neutral host network NHN interworks with a 3GPP network. In the embodiments of this application, the 3GPP network may be a 5G communications network or another possible future network (for example, a 6G communications network). This is not specifically limited in the embodiments of this application. Herein, for ease of description, the 5G communications network is used as an example for description. The embodiments of this application are not limited hereto.

Specifically, a 5G control plane of the 5G communications network includes an access and mobility management function (access and mobility management function, AMF) network element, responsible for access and mobility management, and having functions such as user authentication, handover and location update.

An NHN core network in the NHN network includes a neutral host (Neutral Host, NH) AMF network element. A function of the NH AMF herein is similar to a function of an AMF in the 5G control plane. In addition, the NH AMF may communicate with the AMF in the 5G communications network over an N2 interface or an N14 interface.

It should be understood that in the foregoing system architecture 100, the first access and mobility management function network element 102 may be specifically corresponding to the NH AMF network element in FIG.2, and the second access and mobility management function network element 103 may be specifically corresponding to the AMF network element in FIG.2.

Optionally, the 5G control plane may further include the following network elements:
an authentication server function (authentication server function, AUSF) network element that has an authentication and authorization service function and is responsible for key generation and bidirectional authentication with UE;
a unified data management (unified data management, UDM) network element that stores user subscription data;
a session management function (session management function, SMF) network element that is responsible for session management, including establishment, modification, release, and the like of a packet data unit (packet data unit, PDU) session;
a policy control function (policy control function, PCF) network element that is responsible for user policy management, including both a mobility-related policy and a PDU session-related policy, for example, a quality of service (quality of service, QoS) policy and a charging policy;
a network repository function (network repository function, NRF) network element that is responsible for storing network function and service information and supports a service and network function discovery function (that is, accepts a network function query request, and provides information about a discovered network function); and
a network exposure function (Network Exposure Function, NEF) network element that provides an open network function for an operator to a third party, and the third party provides a secure platform for information transmission on an operator network.

Optionally, the 5G communications system may further include an application function (AF) network element.

Optionally, the 5G communications architecture may further include a user plane function (user plane function, UPF) network element of a 5G core network (Next Generation Core, NG Core). The UPF is a user plane function and is responsible for forwarding user data.

Optionally, the 5G communications architecture may further include a data network (data network, DN), which is a destination network accessed the user via the PDU session.

Optionally, the NHN core network may further include an NH SMF. Specifically, a function of the NH SMF is similar to a function of an SMF on the 5G control plane.

Optionally, the NHN core network may further include an IWK-NEF. Specifically, a function of the IWK-NEF is similar to a function of the NEF on the 5G control plane.

Optionally, the NHN core network may further include an NH UPF. Specifically, a function of the NH UPF is similar to a function of the UPF in the 5G communications architecture.

It should be understood that the foregoing application scenario 200 further includes user equipment (user equipment, UE). The UE may access the NHN network through the NR MF AP, and the UE communicates with the NH AMF over the N1 interface. The NH AMF in the NHN network may communicate with the AMF in the 5G communications network over the N2 interface or the N14 interface.

Optionally, the UE may communicate with the AMF on the 5G control plane over the N1 interface, the NH UPF may communicate with the NG Core UPF on the 5G communications network over an N3 interface and the IWK-NEF may communicate with the NEF on the 5G control plane. In addition, in the 5G communications network, the SMF may communicate with the NG Core UPF over an N4 interface, and the NG Core UPF may communicate with the DN over an N6 interface. This is not limited in this embodiment of this application.

It should be understood that in the foregoing system architecture 100, the terminal device 101 may be specifically corresponding to the UE in FIG 2.

It should be noted that, in FIG 2, only an example in which the terminal device is the UE is used for description. In addition, names of interfaces between network elements in FIG 2 are only examples. In a specific implementation, the interface names of the system architecture 200 may alternatively be other names. This is not specifically limited in this embodiment of this application.

In addition, the NR MF AP device may also be referred to an access device, and the access device is used by the terminal device to access the NHN network. A radio access network device is an access device used by the terminal device to access the mobile communications system in a wireless manner, for example, may be a radio base station, an enterprise small cell, or a home gateway. A specific technology and a specific device type that are used by the radio access network device are not limited in this embodiment of this application.

Certainly, another network element, for example, a network slice selection function (network slice selection function, NSSF) network element, may be further deployed in the foregoing application scenario 200. This is not specifically limited in this embodiment of this application.

The terminal device (terminal) in the embodiments of this application may include various handheld devices, in-vehicle devices, wearable devices, and computing devices that have a wireless communication function, or other processing devices connected to a wireless modem; may further include a subscriber unit (subscriber unit), a cellular phone (cellular phone), a smart phone (smart phone), a wireless data card, a personal digital assistant (personal digital assistant, PDA) computer, a tablet computer, a wireless modem (modem), a handheld device (handheld), a laptop computer (laptop computer), a cordless phone (cordless phone), or a wireless local loop (wireless local loop, WLL) station, a machine type communication (machine type communication, MTC) terminal, user equipment (user equipment, UE), a mobile station (mobile station, MS), a terminal device (terminal device), relay user equipment, and the like. The relay user equipment may be, for example, a 5G residential gateway (residential gateway, RG). For ease of description, the devices mentioned above are collectively referred to as a terminal device in this application.

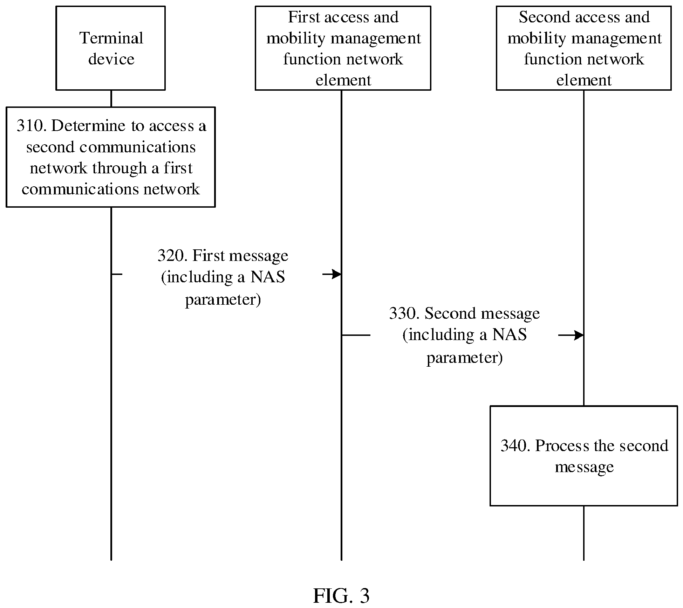

FIG. 3 is a schematic flowchart of a communications method according to an embodiment of this application. The method may be applied to the system architecture 100 shown in FIG. 1, or may be applied to the application scenario 200 shown in FIG. 2. This is not limited in this embodiment of this application.

Specifically, a first communications network may be an NH network in the application scenario 200, and a first mobility management function network element may be an NH AMF network element in the NH network. A second communications network may be a 5G communications network in the application scenario 200, a second mobility management function network element is an AMF network element on a 5G control plane, and the terminal device may be UE in the application scenario 200. This is not specifically limited in this embodiment of this application.

(Optional) 310. The terminal device determines to access the second communications network through the first communications network.

The terminal device may determine, based on configuration information on the terminal, a policy of an operator, a service to be used, and the like, to access the second communications network through the first communications network. A specific manner is not limited in this patent. In a specific example, when the terminal device is covered by the first communications network, but needs to use a service provided by an operator of the second communications network, the terminal device needs to access the second communications network through the first communications network.

320. The terminal device sends a first message to a first access and mobility management function network element in the first communications network, where the first message includes a non-access stratum (Non-access stratum, NAS parameter) used by the terminal device to access the second communications network. Correspondingly, the first access and mobility management function network element receives the first message from the terminal device.

Herein, the NAS parameter used by the terminal device to access the second communications network may be one NAS message, or may be one or more parameters used to compose the NAS message, for example, a terminal identifier, a terminal capability, a registration type, a PDU session identifier, a data network name DNN, and network slice selection assistance information NSSAI, and the like.

Optionally, the first message may include first indication information used to indicate to access the second communications network. Specifically, the first indication information may be an identifier (ID) of the terminal device, for example, a permanent identity (SUPI) of a user or a temporary identity (GUTI) of a user, or may be an independent indication. This is not limited in this embodiment of this application.

Optionally, the first message may further include security capability information of the terminal device. Correspondingly, after receiving the first message, the first access and mobility management function network element stores a security capability of the terminal device.

In a possible implementation, the security capability information includes a security capability applied to the first communications network. Herein, the security capability information of the terminal device is, for example, a security algorithm supported by the terminal device, whether the terminal device holds a public key or a certificate of the first communications network, a security protocol supported by the terminal device and a version number of the related protocol, and the like.

In a specific example, the terminal device may support all security algorithms standardized by the 3GPP organization, or the terminal device may further support security algorithms not standardized by the 3 GPP organization. This is not specifically limited in this embodiment of this application.

In another specific example, the terminal device may support a secure transport layer protocol (Transport Layer Security, TLS), and may specifically support the TLS 1.0, TLS 2.0, or TLS 3.0 version.

330. The first access and mobility management function network element sends a second message to a second access and mobility management function network element in the second communications network, where the second message includes the NAS parameter. Correspondingly, the second access and mobility management function network element receives the second message from the first access and mobility management function network element.

Specifically, in this embodiment of this application, the first access and mobility management function network element may obtain the NAS parameter included in the first message, generate the second message including the NAS parameter, and then send the second message to the second access and mobility management function network element. For example, the NAS parameter may alternatively be presented in a form of an entire message.

In an example, the second message may include a NAS registration request message. In a possible implementation, when the first message includes the NAS registration request message, the first access and mobility management function network element may encapsulate the obtained NAS registration request message into the second message. In another possible implementation, when the first message includes the NAS parameter, the first access and mobility management function network element generates a NAS registration message based on the NAS parameter, and encapsulates the NAS registration request message into the second message.

In an optional embodiment, the second message may further include a network identifier and/or an access type of the first communications network.

Specifically, the network identifier may include a network identifier of a core network and/or an access network in the first communications network. In addition, the network identifiers of the core network and the access network herein may be the same or may be different. This is not limited in this embodiment of this application.

The access type indicates an access technology type of the first communications network, and may include a type of the access network and/or the core network of the first communications network. A value of the access type may be MultiFire, LTE-U, NHN, or the like. This is not limited in this application.

In a possible implementation, the second message may include an access network (Access network, AN) parameter, and the AN parameter may include the network indicator or the access type. Specifically, the AN parameter of the first access and mobility management function network element may be an MF AN parameter sent by the terminal device, or may be a first message sent by the terminal device to the first access and mobility management function network element, or the AN parameter may be generated by the first access and mobility management function network element. This is not specifically limited in this embodiment of this application.

Optionally, in this embodiment of this application, the second message may include security capability information that is of the first communications network and that is supported by the terminal device. Specifically, whether the second message includes the security capability information that is of the first communications network and that is supported by the terminal device may depend on a trust relationship between the first communications network and the second communications network. For example, when the networks are mutually trusted, or the security capability information that is of the first communications network and that is supported by the terminal device must be sent to the second access and mobility management function network element according to a protocol, the second message must include the security capability information that is of the first communications network and that is supported by the terminal device. Specifically, for the security capability information, refer to the foregoing description. To avoid repetition, details are not described herein again.

340. The second access and mobility management function network element processes the second message.

Specifically, the second access and mobility management function network element may parse the second message to obtain the NAS parameter carried in the second message and the another parameter described above.

Therefore, in this embodiment of this application, the first access and mobility management function network element in the first communications network receives the NAS parameter used by the terminal device to access to the second communications network, and sends the NAS parameter to the second access and mobility management function network element in the second communications network, so that the core network in the second communications network completes the process of accessing the second communications network by the terminal device based on the NAS parameter. Therefore, in this embodiment of this application, the terminal device can access the second communications network through the first access and mobility management function network element in the first communications network.

Optionally, in this embodiment of this application, the method further includes: the second access and mobility management function network element sends a terminal authentication request to an authentication server in the second communications network based on the second message, to start an authentication process between the authentication server and the terminal device. Specifically, the authentication process between the authentication server and the terminal device is as follows.

Optionally, the terminal authentication request may include the AN parameter in the foregoing description.

Correspondingly, the authentication server receives the terminal authentication request from the second access and mobility management network, sends an authentication information request message to a data management network element (for example, a UDM) after receiving the authentication request, and receives an authentication information response message sent by the data management network element. Herein, the authentication information response message may include user related data used to authenticate the terminal. The user related data is, for example, subscription information of a user. This is not limited in this embodiment of this application.

After receiving the authentication information response message sent by the data management network element, the authentication server generates an authentication challenge (Authentication Challenge) message, where the authentication challenge message includes a parameter used by the terminal device to authenticate the second communications network, for example, an authentication vector of the terminal device.

Optionally, in this embodiment of this application, the authentication server and the data management network element may be separately deployed on two devices, or may be integrated on one device. In this case, the device has functions of both the authentication server and the data management network element. This is not specifically limited in this embodiment of this application.

Correspondingly, the second access and mobility management function network element receives the authentication challenge message from the authentication server, where the authentication challenge message includes a parameter used by the terminal device to authenticate the second communications network; and
then, the second access and mobility management function network element sends a third message to the first access and mobility management function network element, where the third message includes a parameter used by the terminal device to authenticate the second communications network. In a possible implementation, the authentication challenge message may be directly nested in the third message.

Correspondingly, the first access and mobility management function network element receives the third message from the second access and mobility management function network element, and sends a fourth message to the terminal device. Correspondingly, the terminal device receives the fourth message from the first access and mobility management function network element. Herein, the fourth message includes the parameter used by the terminal device to authenticate the second communications network. In a possible implementation, the authentication challenge message may be directly nested in the fourth message.

After receiving the fourth message, the terminal device performs authentication on the second communications network based on the parameter used by the terminal device to authenticate the second communications network included in the third message. Specifically, for a process in which the terminal device performs the authentication on the second communications network, refer to descriptions in the prior art. Details are not described in this embodiment of this application.

After the terminal device successfully performs the authentication, the terminal device sends a response message of the fourth message to the first access and mobility management function network element, where the response message of the fourth message includes a parameter used by a network element in the second communications network to authenticate the terminal device. In a possible implementation, the response message of the fourth message may include an authentication response message, and the authentication response message is specifically the foregoing response message of the authentication challenge message.

Correspondingly, the first access and mobility management function network element receives the response message of the fourth message from the terminal device, and sends the response message of the third message to the second access and mobility management function network element. Correspondingly, the second access and mobility management function network element receives the response message of the third message from the first access and mobility management function network element, and sends the response message corresponding to the authentication challenge message to the authentication server based on the response message of the third message. Herein, the response message of the third message includes the parameter used by the network element in the second communications network to authenticate the terminal device. In a possible implementation, the third message may directly include the response message of the authentication challenge message.

Correspondingly, the authentication server receives the response message that corresponds to the authentication challenge message and that is sent by the second access and mobility management function network element, and authenticates the terminal device based on the response message that corresponds to the authentication challenge message. Specifically, for a process in which the authentication server authenticates the terminal device, refer to descriptions in the prior art. Details are not described in this embodiment of this application.

After the foregoing authentication process between the authentication server and the terminal device, the authentication server may obtain a result of the authentication between the authentication server and the terminal device. Then, the authentication server sends a terminal authentication response corresponding to the terminal authentication request to the second access and mobility management function network element, where the terminal authentication response includes the result of the authentication between the authentication server and the terminal device.

Optionally, in this embodiment of this application, when the authentication between the authentication server and the terminal device succeeds, the network element in the second communications network may determine a key of the first communications network, or determine a parameter used to generate a key of the first communications network, or determine a base key used to generate a key of the first communications network. Specifically, the key of the first communications network is a key for protecting a message between the terminal and the first communications network. Herein, the network element in the second communications network may be the second access and mobility management function network element, the authentication server, a security anchor network element, or the like. This is not specifically limited in this embodiment of this application.

In this case, the first access and mobility management function network element may receive at least one of the key, the parameter used to generate the key, and the base key used to generate the key from the second access and mobility management function network element, the authentication server, or the security anchor network element. For example, the authentication server may send at least one of the key, the parameter used to generate the key, and the base key used to generate the key to at least one of the second access and mobility management entity and an independent security function entity. Optionally, the independent security function entity may send, to the first access and mobility management function network element, at least one of the key, the parameter used to generate the key, and the base key used to generate the key.

The following describes several manners of generating the key of the first communications network in detail by using an example in which the authentication server is an AUSF, the first access and mobility management function network element is an NH AMF, and the second access and mobility management function network element is an AFM. It should be understood that the following examples are intended for a person skilled in the art to understand the technical solutions in the embodiments of this application, and do not constitute a limitation on the embodiments of this application.

In a possible implementation, the AUSF may generate a base key of the first communications network (namely, the NH network), and the base key may be denoted as NH-Kseaf. In addition, the key of the first communications network may be denoted as NH-Kamf. Specifically, the AUSF may generate the NH-Kseaf with reference to an identifier of the NH network and a freshness parameter. Herein, the freshness parameter is, for example, a counter value: COUNT.

Then, the AUSF may transmit the NH-Kseaf and the freshness parameter to the AMF, or a SEAF in the AMF. In this case, in a possible manner, the AMF or the SEAF in the AMF may generate the NH-Kamf based on the NH-Kseaf, and then send the NH-Kamf to the NH-AMF. In another possible manner, the AMF or the SEAF in the AMF may send the NH-Kseaf to the NH AMF or a security function entity in the NH network, and the NH AMF or the security function entity in the NH network generates the NH-Kamf based on the NH-Kseaf.

Alternatively, the AUSF may send the NH-Kseaf and the freshness parameter to an independent security function entity. In this case, in a possible manner, the independent security function entity sends the NH-Kseaf to the NH AMF or the security function entity in the NH network, and the NH AMF or the security function entity in the NH network generates the NH-Kamf based on the NH-Kseaf. In another possible manner, the independent security function entity generates the NH-Kamf based on the NH-Kseaf, and then sends the NH-Kamf to the NH AMF or the security function entity in the NH network.

Alternatively, the AUSF may directly send the NH-Kseaf to the NH-AMF or the security function entity in the NH network, and then the NH AMF or the security function entity in the NH network generates the HN-Kamf based on the NH-Kseaf.

Optionally, when the security function entity in the NH network obtains the NH-Kamf, the security function entity in the NH network may send the NH-Kamf to the NH AMF.

In another possible implementation, the AMF may generate the NH-Kamf based on a key (denoted as Kamf) of the AMF, the identifier of the NH network, and the freshness parameter, and then the AMF may transmit the NH-Kamf to the NH-AMF. Optionally, the NH-Kamf may be carried in an N14 message or an N2 message for sending, or may be carried in an N14 message or an N2 message together with an SMC message between the AMF and the UE for sending. This is not limited in this embodiment of this application.

Optionally, the AMF may further generate a parameter used to generate the key of the first communications network, and the parameter is, for example, a selected algorithm. Optionally, the parameter used to generate the key of the first communications network and the SMC message between the AMF and the UE may be carried in one N14 message. This is not limited in this embodiment of this application.

In another possible implementation, the NH AMF may generate the NH-Kamf key based on a method agreed with the UE in advance. Specifically, for the agreed method, refer to a key generation method in the prior art. Details are not described in this embodiment of this application.

Alternatively, when the NH AMF does not receive a key, a parameter used to generate a key, or a base key used to generate a key from the AUSF, the AMF, or an independent security function entity, the NH AMF may request a key from the AMF. After receiving the request sent by the NH AMF, the AMF sends, to the NH AMF, the key or at least one of the parameter used to generate the key and the base key used to generate the key.

When the NH AMF receives the parameter used to generate the key or the base key used to generate the key (but does not receive the key), the method further includes: generating, by the first access and mobility management function network element, the key based on the parameter used to generate the key and/or the base key used to generate the key. Herein, for a manner in which the NH AMF generates the key based on the parameter used to generate the key and/or the base key used to generate the key, refer to the foregoing description. To avoid repetition, details are not described herein again.

Optionally, in this embodiment of this application, the method further includes: performing, by the first access and mobility management function network element, security protection on a first security mode command (Security Mode Command, SMC) based on the key of the first communications network. The first SMC is configured to enable security protection for message exchange between the terminal device and the first communications network.

It should be understood that in this embodiment of this application, only an example in which a name of a message or a command used to enable security protection on message exchange between the terminal device and the communications network is a security mode command, namely, an SMC, is used for description. This is not limited in this embodiment of this application.

The first access and mobility management function network element sends, to the terminal device, the first SMC on which security protection is performed. Correspondingly, the terminal device receives the first SMC from the first access and mobility management function network element.

Optionally, after the terminal device successfully verifies the first SMC, the method further includes:
sending, by the terminal device, a first security mode complete (Security Mode Complete, SMP) message to the first access and mobility management function network element, where the first SMP message is a message generated by the terminal device in response to the first SMC after the terminal device successfully verifies the first SMC. Correspondingly, the first access and mobility management function network element receives the first SMP message from the terminal device.

It should be understood that in this embodiment of this application, an example in which a name of the message in response to the SMC is the security mode complete message, namely, the SMP is used for description. This is not limited in this embodiment of this application.

Optionally, in this embodiment of this application, the method further includes:
sending, by the second access and mobility management function network element, a second SMC to the first access and mobility management function network element, and correspondingly, receiving, by the first access and mobility management function network element, the second SMC from the second access and mobility management function network element, and sending the second SMC to the terminal device, where the second SMC is configured to enable security protection on message exchange between the terminal device and the second communications network. Correspondingly, the terminal device receives the second SMC from the first access and mobility management function network element.

Optionally, the terminal device sends a second SMP to the first access and mobility management function network element. Correspondingly, the first access and mobility management function network element receives the second SMP from the terminal device, and the second access and mobility management function network element receives the second SMP from the first access and mobility management function network element, the second SMP is a message generated by the terminal device in response to the second SMC after the terminal device successfully verifies the second SMC.

For ease of description, the following describes a process of security protection for message exchange between the terminal device and the first communications network and between the terminal device and the second communications network by using an example in which the first access and mobility management function network element is an NH AMF, the second access and mobility management function network element is an AFM, and the terminal device is UE. In the following, the second SMC is denoted as SMC #1, the first SMC is denoted as SMC #2, the second SMP is denoted as SMP #1, and the first SMP is denoted as SMP #2.

Optionally, in this embodiment of this application, the NH AMF receives the SMC #1 from the AMF, and sends the SMC #1 to the UE.

Specifically, the AMF may obtain the key Kamf of the AMF in a manner in the prior art, further derive Knas-int and Knas-enc based on the key Kamf, and then perform security protection on the SMC #1 by using the key Knas-int. Here, the security protection includes integrity protection.

Specifically, in this embodiment of this application, the AMF may send an N14 message to the NH AMF, and the N14 message may include the foregoing NH-Kamf and the SMC #1. Specifically, the NH-Kamf may be placed outside the SMC #1, or may be placed inside the SMC #1. In a specific example, if the NH-AMF needs to use the key generation algorithm selected by the AMF as an input parameter for generating the NH-Kamf, the AMF may obtain the NH-Kamf outside the SMC #1, that is, the NH-Kamf can be placed outside the SMC #1. Correspondingly, after obtaining the N14 message, the NH AMF may determine the NH-Kamf and the SMC #1.

Optionally, in this embodiment of this application, the method further includes: performing, by the NH AMF, security protection on the SMC #2 based on the key of the NH network. Then, the NH AMF sends, to the UE, the SMC #2 on which security protection is performed.

Specifically, after obtaining the key NH-Kamf, the NH AMF may select a to-be-used security protection method, and generate, with reference to the security protection method, a key Knas for protecting a NAS message between the UE and the NH AMF. Then, the SMC #2 is protected based on the Knas key. Herein, security protection is at least one of encryption protection and integrity protection.

Optionally, in this embodiment of this application, in a possible implementation, the NH AMF sends both the SMC #1 and the SMC #2 to the UE.

Specifically, the NH AMF may send an N1-N message to the UE, and the N1-N message includes the SMC #1 and the SMC #2. In this case, in the N1-N message, the SMC #1 may be nested in the SMC #2, or the SMC #1 and the SMC #2 may be two parallel messages. This is not specifically limited in this embodiment of this application.

Specifically, the NH AMF may perform security protection again on the SMC # 1 received from the AMF, so that the SMC #1 may be nested in the SMC #2, that is, the SMC #1 becomes a part of a payload (payload) of the SMC #2. Alternatively, the NH AMF may not process the SMC #1 received from a MAF, but perform security protection on the SMC #2 based on the NH-Kamf, and finally encapsulate the SMC #1 and the SMC #2 together in the N1-N message and send the N1-N message to the UE. In this case, the SMC #1 and the SMC #2 are two parallel messages in the N1-N message.

Alternatively, in another possible implementation, after sending the SMC #1 to the UE, the NH AMF sends the SMC #2 to the UE.

Specifically, after receiving the SMC #1 from the AMF, the NH AMF encapsulates the SMC #1 into an N1-N message #1, and sends the N1-N message #1 to the UE. Then, the NH AMF encapsulates an SMC, obtained after security protection is performed on the SMC #2 based on the NH-Kamf, in an N1-N message #2, and sends the N1-N message #2 to the UE.

Alternatively, in another possible implementation, after sending the SMC #2 to the UE, the NH AMF sends the SMC #1 to the UE.

Specifically, after receiving the SMC #1 from the AMF, the NH AMF first stores the SMC #1. The NH AMF first encapsulates an SMC, obtained after security protection is performed on the SMC #2 based on the NH-Kamf, in an N1-N message #2 and sends the N1-N message #2 to the UE, and then encapsulates the SMC #1 in an N1-N message #1 and sends the N1-N message #1 to the UE.

It should be noted that, in this embodiment of this application, for interactions of the SMC #1 and the SMC #2, one SMC interaction starts only after completion of a previous SMC interaction, that is, the other SMC message is sent after an SMP corresponding to one SMC is received. Alternatively, one SMC interaction starts without waiting for completion of a previous SMC interaction.

Optionally, in this embodiment of this application, the NH AMF sends, to the UE, the parameter used to generate the key. Herein, the parameter used to generate the key may also be referred to as a material for generating the key, for example, a security protection algorithm. In addition, for security purposes, the parameter used to generate the key herein does not include the key itself or the base key used to generate the key.

Specifically, the parameter used to generate the key may be sent together with the security command mode #2. For example, the parameter used to generate the key may be placed outside the security command mode #2, and then the NH AMF performs security protection on the parameter used to generate the key and the security command mode #2 together.

Optionally, in this embodiment of this application, NAS encryption may be performed only between the UE and the NH AMF. In other words, encryption may not be performed between the NH AMF and the AMF. In this case, in a possible implementation, the AMF sends the SMC #1 to the UE through the NH AMF, where the SMC #1 includes an indication indicating that a NAS key does not need to be negotiated between the UE and the AMF. In this way, security protection may not need to be performed on the subsequent NAS message between the UE and the AMF. Alternatively, in another possible implementation, the AMF may not send the SMC #1, but send a NAS registration accept message to the NH AMF, to trigger the NH AMF to send the SMC #2 to the UE. Alternatively, in another possible implementation, the AMF sends an N2 message or an N14 message (or invokes an N14 service), to trigger the NH AMF to send the SMC #2 to the UE.

Correspondingly, when receiving the SMC #1, the UE verifies whether security protection of the AMF is correct. When receiving the SMC #2, the UE verifies whether security protection of the NH AMF is correct.

In a specific implementation, the UE may verify security protection on the SMC #2 between the UE and the NH AMF, and if the security protection on the SMC #2 is valid, the UE may further verify whether security protection on the SMC #1 between the UE and the AMF is valid. If the security protection on the SMC #2 is invalid, the UE may further verify whether security protection on the SMC #1 between the UE and the AMF is valid. In this case, it may be understood that a problem has occurred on the NH network, but the 3GPP network operates properly.

In another possible implementation, the UE may verify security protection on the SMC #1 between the UE and the AMF. If the security protection of the SMC #1 is valid, the UE may further verify whether security protection on the SMC #2 between the UE and the NH AMF is valid. If the security protection on the SMC #1 is invalid, the UE may not verify the SMC #2 between the UE and the NH AMF. In this case, it may be understood that the 5G network element is abnormal, and the UE may not need to access the network.

In addition, in this embodiment of this application, after determining that the security protection on the SMC #1 is valid, the UE may generate an SMP message #1, and send the SMP #1 to the NH AMF. After determining that the security protection on the SMC #2 is valid, the terminal device may generate a security mode complete (Security Mode Complete, SMP) message #2, and send the SMP #2 to the NH AMF.

Optionally, the security protection may be performed on the SMP in a manner that corresponds to a protection method of the corresponding SMC.

In one aspect, the security protection may be performed on the SMP #1 in a same manner as the SMC #1, and the security protection may be performed on the SMP #2 in a same manner as the SMC #2.

In another aspect, when the SMC #1 is nested in the SMC #2, the SMP #2 may be nested in the SMP #1; or when the SMC #1 and the SMC #2 may be two parallel messages in the N1-N message, the SMP #1 and the SMP #2 are two parallel messages in one N1-N message; or when the SMC #1 is in the N1-N message #1 and the SMC #2 is in the N1-N message #2, the SMP #1 is placed in an N1-N message #3 and the SMP #2 is placed in an N1-N message #4, where the N1-N message #3 is in response to the N1-N message #1, and the N1-N message #4 is in response to the N1-N message #2.

Alternatively, optionally, the NH AMF may further indicate, to the UE, a security protection method expected to be used for the SMP #2, for example, encryption protection only. In an example, the indication information and the SMC #2 may be sent to the UE together, for example, encapsulated in the same N1-N message. In this case, the UE may perform security protection on the SMP #2 according to the indication.

Alternatively, when the SMC #1 is not sent, the NH AMF does not need to send the SMP #1 to the AMF. In other words, the UE only needs to generate and send the SMP #2 in a specified manner or in a manner corresponding to the SMC #2.

Correspondingly, after receiving the SMP message, the NH AMF verifies the SMP message. Optionally, the NH AMF may verify the SMP message based on a method selected by the AMF.

Specifically, when the SMP #1 and the SMP #2 are in the same N1-N message, when the NH AMF successfully verifies the SMP #2, the NH AMF sends a remaining message in the N1-N message to the AMF. When the SMP #1 is placed in the N1-N message #3 and the SMP #2 is placed in the N1-N message #4, after the NH AMF successfully verifies the SMP #2, the NH AMF may send the SMC #1 to the UE, and the UE verifies the SMC #1.

Therefore, in this embodiment of this application, the first access and mobility management function network element in the first communications network receives the NAS parameter used by the terminal device to access the second communications network, and sends the NAS parameter to the second access and mobility management function network element in the second communications network. In this way, the terminal device registers with the second communications network through the first communications network, and performs security negotiation on the NAS message between the terminal device and the first communications network based on a parameter provided by a core network of the second communications network, thereby improving network security performance.

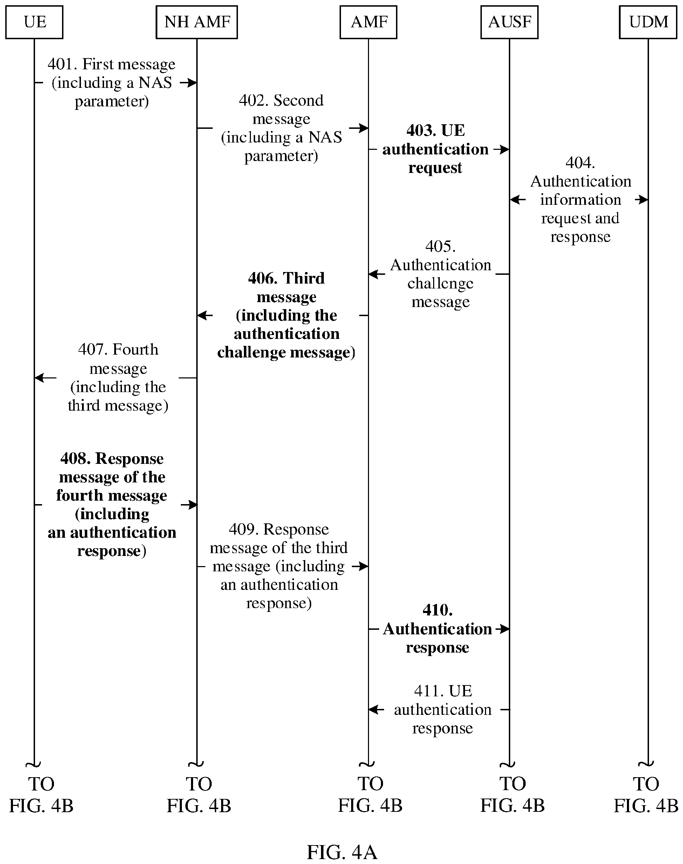

For ease of understanding, the following describes this embodiment of this application in detail with reference to FIG. 4A to FIG. 4C by using an example in which a first access and mobility management function network element is an NH AMF, a second access and mobility management function network element is an AMF, and a terminal device is UE. FIG. 4A to FIG. 4C are a schematic flowchart of a communications method according to an embodiment of this application. The method may be applied to the system architecture 100 shown in FIG. 1, or may be applied to the application scenario 200 shown in FIG. 2. This is not limited in this embodiment of this application.

401. The UE sends a first message to an NH AMF in an NH network, where the first message includes a NAS parameter used by the UE to access a 5G communications network.

Optionally, in this embodiment of this application, an interface between the UE and the NH AMF may be referred to as an N1-N interface, and a message transmitted between the UE and the NH AMF over the N1-N interface may be referred to as an N1-N message. In this case, the first message may be specifically referred to as an N1-N registration request (N1-N/Registration Request) message.

In an example, the NAS parameter may be specifically a NAS registration request (NAS registration request) message. In this case, the NAS registration request message may be nested in the first message, that is, the NAS registration request message is an inner message. In this case, the first message may be denoted as the N1-N/Registration Request (NAS[Registration Request]).

Optionally, the first message may further include security capability information of the UE.

Optionally, the first message may include first indication information used to indicate to access the 5G communications network. Specifically, the first indication information may be an identifier (ID) of the UE, or may be an independent identifier

Specifically, for the first message and information included in the first message, refer to the foregoing description. To avoid repetition, details are not described herein again.

402. The NH AMF sends a second message to an AMF in a 5G communications network, where the second message includes the NAS parameter.

In this embodiment of this application, an interface between the NH AMF and the AMF may be an N14 interface or an N2 interface. Correspondingly, the message between the NH AMF and the AMF may be referred to as an N14 message or an N2 message.

In an example, the NAS parameter included in the second message may be the NAS registration request message. In an example, in this case, the second message may be denoted as an N14 message (NAS[Registration Request]) or an N2 message (NAS[Registration Request]).

Optionally, the second message may further include a network identifier and/or an access type of the NH network.

Optionally, in this embodiment of this application, the second message may include the security capability information that is of the NH network and that is supported by the UE.

Specifically, for the second message and the information included in the second message, refer to the foregoing description. To avoid repetition, details are not described herein again.

403. The AMF sends a UE authentication request (UE Authentication Request) to an AUSF based on the second message.

Optionally, the UE authentication request may include the foregoing AN parameter.

404. The AUSF sends an authentication information request (Auth Info request) to a UDM, and receives an authentication information response (Auth Info response) sent by the UDM.

Specifically, for the authentication information request and the authentication information response, refer to the foregoing description. To avoid repetition, details are not described herein again.

405. The AUSF sends an authentication challenge message (Authentication Challenge) to the AMF, where the authentication challenge message includes a parameter used by the UE to authenticate the 5G communications network, for example, includes an authentication vector of the UE.

406. The AMF sends a third message to the NH AMF, where the third message includes the parameter used by the UE to authenticate the 5G communications network. In an example, the third message may include the authentication challenge message, and the third message may be denoted as N14 (NAS[Authentication Challenge]) or N2 (NAS [Authentication Challenge]).

407. The NH AMF sends a fourth message to the UE, where the fourth message includes the parameter used by the UE to authenticate the 5G communications network. In an example, the fourth message may include the authentication challenge message. To be specific, the fourth message is an authentication challenge message consistent with an inner NAS message, and is denoted as N1-N (NAS [Authentication Challenge]). In another example, the fourth message may be the N1-N message specially used to transmit a NAS message between the UE and the AMF, and is denoted as N1-N Direct NAS Transfer.

408. The UE sends a response message of the fourth message to the NH AMF, where the response message of the fourth message includes the parameter used by a network element of the 5G communications network to authenticate the UE. In an example, the response message of the fourth message includes a response message of the authentication challenge message, and the response message of the fourth message may be denoted as N1-N (NAS[Authentication response]).

409. The NH AMF sends a response message of the third message to the AMF, where the response message of the third message includes the parameter used by the network element of the 5G communications network to authenticate the UE. In an example, the response message of the third message includes a response message of the authentication challenge message. The response message of the third message may be denoted as N14 (NAS[Authentication response]) or N2 (NAS[Authentication response]).

410. The AMF sends a response message (Authentication response) of the authentication challenge message to the AUSF.

Specifically, the AMF may send the response message of the authentication challenge message in the third message to the AUSF.

411. The AUSF sends a UE authentication response (UE Authentication Response) to the AMF. Specifically, the UE authentication response is a response message of the UE authentication request sent by the AMF to the AUSF in 403.

Specifically, the foregoing steps 403 to 411 are corresponding to an authentication process between the AUSF and the UE. Specifically, for the authentication process between the AUSF and the UE, refer to the foregoing description. To avoid repetition, details are not described herein again.

In addition, the UE authentication response includes a result of authentication between the AUSF and the UE. Optionally, when authentication between the AUSF and the UE succeeds, the network element in the 5G communications network may determine a key (denoted as NH-Kamf) for protecting a message between the UE and the NH network, or determine a parameter for generating the key, or determine a base key of the key, the base key is, for example, NH-Kseaf. Then, the network element in the 5G communications network may send, to the NH AMF, at least one of the NH-Kamf, the parameter for generating the NH-Kamf, or the NH-Kseaf. Alternatively, the NH AMF may generate the NH-Kamf by itself.

Specifically, for a process of generating and transmitting the NH-Kamf, refer to the foregoing description. To avoid repetition, details are not described herein again.

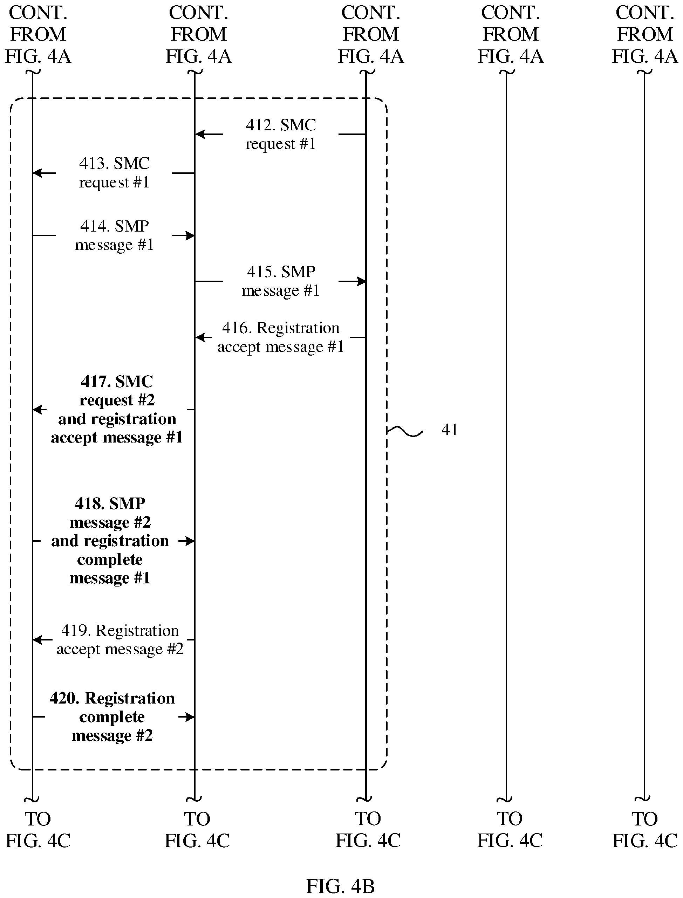

A process 41 in FIG. 4B shows a process of security protection for message exchange first between the UE and the 5G communications network, and then between the UE and the NH network, where the process 41 includes steps 412 to 420.

412. The AMF sends an SMC request #1 to the NH AMF. In this case, the message sent in 412 may be denoted as N14 (NAS[SMC Request]) or N2 (NAS[SMC Request]). Optionally, in 412, the AMF may further send a security parameter, for example, the NH-Kamf or the NH-Kseaf, to the NH AMF together with the SMC request #1.

Optionally, the SMC request #1 includes indication information, and the indication information is used to indicate that a NAS key does not need to be negotiated between the UE and the AMF.

Alternatively, in 412, the AMF may send the N14 message or the N2 message to the NH AMF, and the message does not include the SMC request #1.

413. The NH AMF may not process the SMC request #1, but directly send the SMC request #1 to the UE. In this case, the message sent in 413 may be denoted as N1-N (NAS[SMC Request]).

414. The UE may verify whether security protection on the SMC request #1 between the UE and the AMF is valid. When the security protection is verified as valid, the UE sends an SMP message #1 to the NH AMF, where the SMP message #1 is a response message of the SMC request #1. In this case, the message sent in 414 may be denoted as N1-N (NAS[SMC Complete]).

415. The NH AMF sends the SMP message #1 to the AMF. In this case, the message sent in 415 may be denoted as N14 (NAS[SMC Complete]) or N2 (NAS[SMC Complete]).

Alternatively, if the N2 message or the N14 message in step 412 does not include the SMC request #1, 413 and 414 are not performed. In addition, the following may be performed in 415 instead: The NH AMF sends a response message corresponding to the N2 message or the N14 message in 412 to the AMF.

416. The AMF sends a registration accept message #1 to the NH AMF, where the registration accept message #1 indicates that the AMF allows the UE to access the 5G communications network. In this case, the message sent in 416 may be denoted as N14 (NAS[Registration Accept]) or N2 (NAS[Registration Accept]).

417. The NH AMF sends an SMC message #2 and the registration accept message #1, denoted as N1-N[SMC Request (NAS[Registration Accept])], to the UE.

Specifically, the NH AMF may generate, based on the NH-Kamf, a key NH-Knas used to encrypt the NAS message, and then perform security protection on the SMC #2 by using the NH-Knas. At the same time, the AMF sends the registration accept message #1 received from the AMF to the UE.

418. The UE sends an SMP message #2 and a registration complete message #1, denoted as N1-N[SMC complete (NAS [Registration complete])], to the NH-AMF, where the registration complete message #1 indicates that the UE successfully accesses the 5G communications network.

Specifically, the UE may verify whether security protection on an SMC request #2 between the UE and the AMF is valid. When the security protection is verified as valid, the UE sends the SMP message #2 to the NH AMF, where the SMP message #2 is a response message of the SMC request #2.

In addition, when receiving the registration accept message #1, the UE generates the registration complete message #1 corresponding to the registration accept message #1, and sends the registration complete message #1 to the NH AMF. Optionally, the SMP message #2 and the registration complete message #1 may be sent together.

Optionally, security protection may be performed on the SMP in a manner that corresponds to a protection method of the corresponding SMC. Specifically, for manners of sending the SMP message #1 and the SMP message #2, refer to the foregoing description. To avoid repetition, details are not described herein again.

419. The NH AMF sends a registration accept message #2 denoted as N1-N[Registration accept] to the UE, where the registration accept message #2 indicates that the NH AMF allows the UE to access the NH network.

420. The UE generates a registration complete message #2 corresponding to the sent registration accept message #2, and sends the registration complete message #2 denoted as N1-N[Registration complete] to the NH AMF, where the registration complete message #2 indicates that the UE successfully accesses the NH network.

Specifically, for the SMC request #1, the SMC request #2, the SMP message #1, and the SMP message #2, refer to the descriptions of the SMC #1, the SMC #2, the SMP #1 and the SMP #2 in FIG. 3. To avoid repetition, details are not described herein again.

A process 42 shows a process of security protection on message exchange between the UE and the 5G communications network and between the UE and the NH network. The process 42 includes steps 412' to 418'.

412'. The AMF sends an SMC request #1 to the NH AMF. Optionally, in 412', the AMF may further send a security parameter, for example, the NH-Kamf or the NH-Kseaf, to the NH AMF together with the SMC request # 1.

Optionally, the SMC request #1 includes an indication, indicating that the NAS key does not need to be negotiated between the UE and the AMF.

Alternatively, in 412', the AMF may send the N14 message or the N2 message to the NH AMF, and the message does not include the SMC request #1.

413'. The NH AMF sends the SMC request #1 and an SMC request #2 to the UE.

Specifically, after receiving the SMC request #1, the NH AMF may generate, based on the NH-Kamf, the key NH-Knas used to encrypt the NAS message, and then perform security protection on the SMC #2 by using the NH-Knas or perform security protection on the SMC request #1 and the SMC request #2. Then, the SMC request #1 and the SMC request #2 are sent together to the UE.

Specifically, for a manner of simultaneously sending the SMC request #1 and the SMC request #2, refer to the foregoing description. To avoid repetition, details are not described herein again.

414'. The UE sends an SMP message #1 and an SMP message #2 to the NH AMF, where the SMP message #1 is a response message of the SMC request #1, and the SMP message #2 is a response message of the SMC request #2.

Specifically, the UE may separately verify whether security protection on the SMC request #1 and that on the SMC request #2 are valid. When the security protection on both the SMC request #1 and the SMC request #2 is verified as valid, the SMP message #1 and the SMP message #2 are sent to the NH AMF.

Optionally, the security protection may be performed on the SMP in a manner that corresponds to a protection method of the corresponding SMC. Specifically, for manners of sending the SMP message #1 and the SMP message #2, refer to the foregoing description. To avoid repetition, details are not described herein again.

415'. The NH AMF sends the SMP message #1 to the AMF.

Specifically, the NH AMF may obtain the SMP #2, and forward the remaining message to the AMF, where the remaining message includes the SMP message #1.

Alternatively, if the N2 message or the N14 message in 412' does not include the SMC request #1, a message sent in 413' does not include the SMC request #1, and a message sent in 414' does not include the SMP message #1. In addition, the message sent in 415' may be replaced with the response message corresponding to the N2 message or the N14 message in 412' may be sent in 415' instead.

416'. The AMF sends a registration accept message #1 to the NH AMF, where the registration accept message #1 indicates that the AMF allows the UE to access the 5G communications network.

Alternatively, 412' is not executed, and 416' is executed before 413'. In this case, the message sent in 413' does not include the SMC request #1, the message sent in 414' does not include the SMP # message 1, and 415' is not executed.

417'. The NH AMF sends the registration accept message #1 and a registration accept message #2 to the UE, where the registration accept message #2 indicates that the NH AMF allows the UE to access the NH network.

418'. The UE sends a registration complete message #1 and a registration complete message #2 to the NH AMF.

The registration complete message #1 indicates that the UE successfully accesses the 5G communications network, and the registration complete message #2 indicates that the UE successfully accesses the NH network.

Specifically, for the SMC request #1, the SMC request #2, the SMP message #1, and the SMP message #2, refer to the descriptions of the SMC #1, the SMC #2, the SMP #1 and the SMP #2 in FIG. 3 and in the process 41 in FIG. 4B. To avoid repetition, details are not described herein again.

Optionally, in this embodiment of this application, if authentication performed by the AUSF on the UE fails, after receiving the UE authentication response sent by the AUSF, the AMF sends a NAS registration reject (NAS[Registration Reject]) message to the NH AMF. After receiving the NAS registration reject message, the NH AMF may nest the NAS registration message in an N1-N registration reject message (N1-N [Registration Reject (NAS[Registration Reject]]) and send the N1-N registration reject message to the UE, or directly sends the N1-N registration reject message (N1-N[Registration Reject]) to the UE.

Therefore, in this embodiment of this application, the terminal device registers with a 3GPP 5G core network through an NHN network, and performs security negotiation on the NAS message between the terminal device and the NHN network by using the parameter provided by the 3GPP 5G core network, thereby improving network security performance.

The solutions provided in the embodiments of this application are described mainly from a perspective of interaction between the different network elements. It may be understood that, to implement the foregoing functions, the first access and mobility management function network element, the second access and mobility management function network element, and the terminal device include corresponding hardware structures and/or software modules for performing the functions. With reference to the units and algorithm steps described in the embodiments disclosed in this application, embodiments of this application can be implemented in a form of hardware or hardware and computer software. Whether a function is performed by hardware or hardware driven by computer software depends on particular applications and design constraints of the technical solutions. A person skilled in the art may use different methods to implement the described functions for each particular application, but it should not be considered that the implementation falls beyond the scope of the technical solutions in the embodiments of this application.

In the embodiments of this application, functional units of the first access and mobility management function network element, the second access and mobility management function network element, the terminal device, and the like may be divided according to the foregoing examples in the method, for example, functional units may be divided for various corresponding functions, or two or more functions may be integrated in a processing unit. The integrated unit may be implemented in a form of hardware, or may be implemented in a form of a software functional unit. It should be noted that, in this embodiment of this application, unit division is exemplary, and is merely a logical function division. In actual implementation, another division manner may be used.

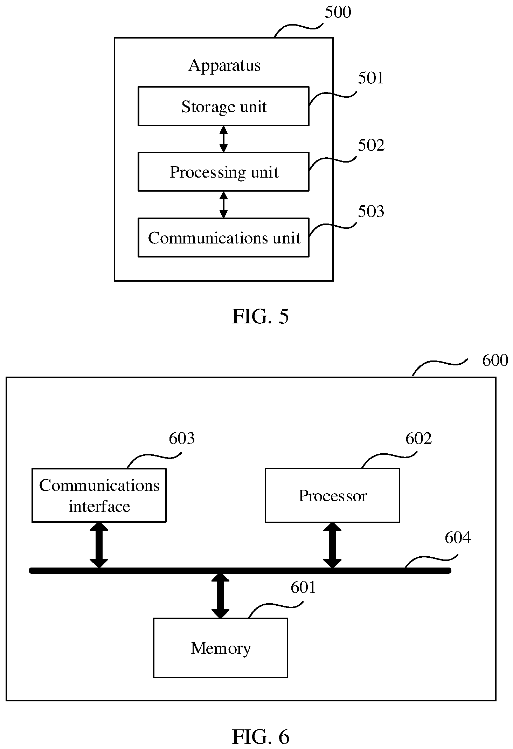

FIG. 5 is a possible example block diagram of an apparatus according to an embodiment of this application, where an integrated unit is used. The apparatus 500 may exist in the form of software, hardware, or a combination of software and hardware. The apparatus 500 includes a processing unit 502 and a communications unit 503. The processing unit 502 is configured to control and manage actions of the apparatus. The communications unit 503 is configured to support communication between the apparatus and another device. The apparatus may further include a storage unit 501, configured to store a program code and data of the apparatus.

The apparatus 500 shown in FIG. 5 may be the first access and mobility management function network element or the second access and mobility management function network element in the embodiments of this application.

When the apparatus 500 shown in FIG. 5 is the first access and mobility management function network element, the processing unit 502 can support the apparatus 500 in performing actions completed by the first access and mobility management function network element in the foregoing method examples. For example, the processing unit 502 supports the apparatus 500 in: processing the first message and determining the second message in FIG. 3; processing the first message, determining the second message, processing the third message, determining the fourth message, processing the response message of the fourth message, determining the response message of the third message, processing the SMC request #1, processing the SMP message #1, processing the registration accept message #1, determining the SMC request #2, processing the SMP message #2, determining the registration accept message #2, and processing the registration complete message #2 in steps in FIG. 4A to FIG. 4C; and/or another process used for the technology described in this specification. The communications unit 503 can support the apparatus 500 in communicating with the second access and mobility management function network element, the terminal device, an independent security function entity, a SEAF network element in a first communications network, and the like. For example, the communications unit 503 supports the apparatus 500 in performing steps 320 and 330 in FIG. 3 and steps 401, 402, 406, 407, 408, 409, 412, 413, 414, 415, 416, 417, 418, 419 and 420, or 412', 413', 414', 415', 416', 417', and 418' in FIG. 4A to FIG. 4C, and/or other related communication processes.

When the apparatus 500 shown in FIG. 5 is the second access and mobility management function network element, the processing unit 502 can support the apparatus 500 in performing the actions completed by the second access and mobility management function network element in the foregoing method examples. For example, the processing unit 502 supports the apparatus 500 in: processing the second message in FIG. 3; processing the second message, determining the UE authentication request, processing the authentication challenge message, determining the third message, processing the response message of the third message, determining the authentication response, and processing the UE authentication response in FIG. 4A to FIG. 4C; and/or another process used for the technology described in this specification. The communications unit 503 can support the apparatus 500 in communicating with the first access and mobility management function network element, an authentication server, and the like. For example, the communications unit 503 supports the apparatus 500 in performing step 330 in FIG. 3, and steps 402, 403, 405, 406, 409, 410, and 411 in FIG. 4A to FIG. 4C, and/or another related communication processes.

For example, the processing unit 502 may be a processor or a controller, such as a central processing unit (Central Processing Unit, CPU), a general-purpose processor, a digital signal processor (Digital Signal Processing, DSP), an application-specific integrated circuit (Application-Specific Integrated Circuit, ASIC), a field programmable gate array (Field Programmable Gate Array, FPGA), or another programmable logical device, a transistor logical device, a hardware component, or any combination thereof. The processor/controller may implement or execute various example logical blocks, modules, and circuits described with reference to content disclosed in this application. Alternatively, the processor may be a combination of processors implementing a computing function, for example, a combination of one or more microprocessors, or a combination of the DSP and a microprocessor. The communications unit 503 may be a communications interface, where the communications interface is a general term. In specific implementation, the communications interface may include one or more interfaces. The storage unit 501 may be a memory.

When the processing unit 502 is the processor, the communications unit 503 is the communications interface, and the storage unit 501 is the memory, the apparatus 500 in this embodiment of this application may be an apparatus 600 shown in FIG. 6.

Referring to FIG. 6, the apparatus 600 includes a processor 602 and a communications interface 603. Further, the apparatus 600 may further include a memory 601. Optionally, the apparatus 600 may further include a bus 604. The communications interface 603, the processor 602, and the memory 601 may be interconnected through the bus 604. The bus 604 may be a peripheral component interconnect (Peripheral Component Interconnect, PCI for short) bus, an extended industry standard architecture (Extended Industry Standard Architecture, EISA for short) bus, or the like. The bus 604 may be classified into an address bus, a data bus, a control bus, and the like. For ease of representation, only one thick line is used to represent the bus in FIG. 6, but this does not mean that there is only one bus or only one type of bus.

The processor 602 may perform various functions of the apparatus 600 by running or performing a program stored in the memory 601.

For example, the apparatus 600 shown in FIG. 6 may be the first access and mobility management function network element or the second access and mobility management function network element in the embodiments of this application.

When the apparatus 600 is the first access and mobility management function network element, the processor 602 can perform actions completed by the first access and mobility management function network element in the foregoing method examples by running or executing the program stored in the memory 601. When the apparatus 600 is the second access and mobility management function network element, the processor 602 can perform actions completed by the second access and mobility management function network element in the foregoing method examples by running or executing the program stored in the memory 601.

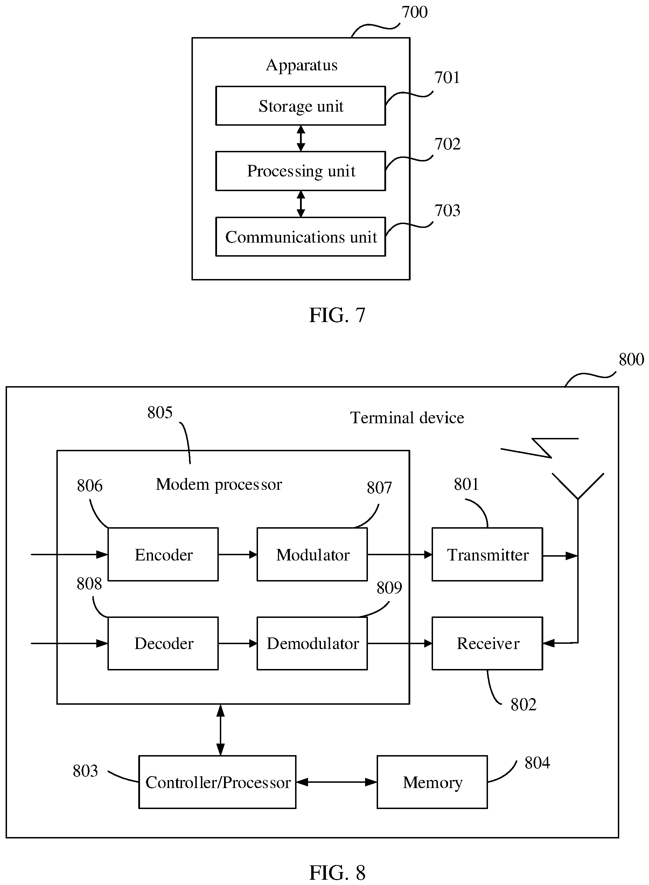

FIG. 7 is a possible example block diagram of an apparatus in an embodiment of this application, where an integrated unit is used. The apparatus 700 may be in a form of software, hardware, or a combination of software and hardware. FIG. 7 is the possible example block diagram of the apparatus in the embodiments of this application. The apparatus 700 includes a processing unit 702 and a communications unit 703. The processing unit 702 is configured to control and manage actions of the apparatus, and the communications unit 703 is configured to support communication between the apparatus and another device. The apparatus may further include a storage unit 701, configured to store a program code and data of the apparatus.

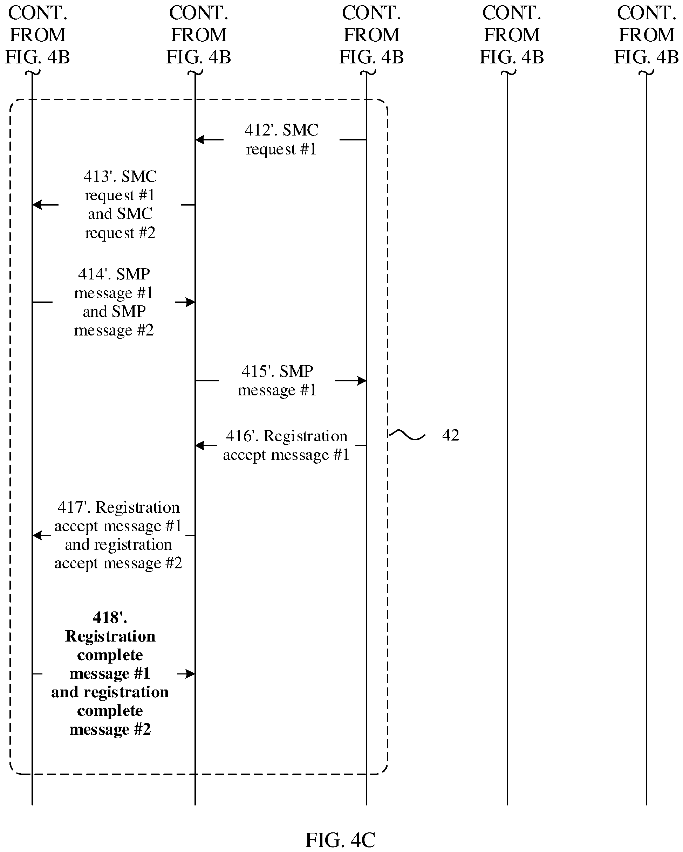

The apparatus 700 shown in FIG. 7 may be a terminal device, or may be a chip applied to the terminal device. The processing unit 702 can support the apparatus 700 in performing the actions completed by the terminal device in the foregoing method examples. For example, the processing unit 702 supports an apparatus 700 in performing step 310, determining the first message in FIG. 3, determining the first message , processing the fourth message, determining the response message of the fourth message, processing the SMC request #1 and the SMC request #2, determining the SMP message #1 and the SMP message #2, processing the registration accept message #1 and the registration accept message #2, determining the registration complete message #1 and the registration complete message #2 in the steps in FIG. 4A to FIG. 4C, and/or another process used for the technology described in this specification. The communications unit 703 can support the apparatus 700 in communicating with the first access and mobility management function network element and the like. For example, the communications unit 703 supports the apparatus 700 in performing step 320 in FIG. 3, steps 401, 407, 408, 413, 414, 417, 418, 419 and 420 in FIG. 4A to FIG. 4C, or steps 413', 414', 417', 418', 419', and 420' in FIG 4, and/or other related communication processes.

For example, the processing unit 702 may be a processor or a controller, such as may be a CPU, a general purpose processor, a DSP, an ASIC, an FPGA, or another programmable logic device, a transistor logic device, a hardware component, or any combination thereof. The processor/controller may implement or execute various example logical blocks, modules, and circuits described with reference to content disclosed in this application. Alternatively, the processor may be a combination of processors implementing a computing function, for example, a combination of one or more microprocessors, or a combination of the DSP and a microprocessor. The communications unit 703 may be a communications interface. The communications interface is a general term. In specific implementation, the communications interface may include one or more interfaces. The storage unit 701 may be a memory.

When the processing unit 702 is a processor, the communications unit 703 is a transceiver, and the storage unit 701 is the memory, the apparatus 700 in this embodiment of this application may be a terminal device shown in FIG. 8.

FIG. 8 is a simplified schematic diagram of a possible design structure of the terminal device according to an embodiment of this application. The terminal device 800 includes a transmitter 801, a receiver 802, and a processor 803. The processor 803 may also be a controller, and is represented as the "controller/processor 803" in FIG. 8. Optionally, the terminal device 800 may further include a modem processor 805. The modem processor 805 may include an encoder 806, a modulator 807, a decoder 808, and a demodulator 809.

In an example, the transmitter 801 adjusts (for example, through analog conversion, filtering, amplification, and up-conversion) an output sampling and generates an uplink signal. The uplink signal is transmitted to the base station in the foregoing embodiments through an antenna. On a downlink, the antenna receives a downlink signal transmitted by the base station in the foregoing embodiments. The receiver 802 adjusts (for example, through filtering, amplification, down-conversion, and digitization) a signal received from the antenna and provides an input sampling. In the modem processor 805, the encoder 806 receives service data and a signaling message that are to be sent in an uplink, and processes (for example, through formatting, coding, and interleaving) the service data and the signaling message. The modulator 807 further processes (for example, through symbol mapping and modulation) the coded service data and signaling message, and provides an output sampling. The demodulator 809 processes (for example, through demodulation) the input sampling and provides symbol estimation. The decoder 808 processes (for example, through de-interleaving and decoding) the symbol estimation and provides decoded data and a decoded signaling message that are to be sent to the terminal device. The encoder 806, the modulator 807, the demodulator 809, and the decoder 808 may be implemented by the combined modem processor 805. These units perform processing based on a radio access technology (for example, an access technology in LTE, 5G, and another evolved system) used by a radio access network. It should be noted that when the terminal device 800 does not include the modem processor 805, the foregoing functions of the modem processor 805 may also be implemented by the processor 803.

The processor 803 controls and manages an action of the terminal device 800, and is configured to perform a processing process performed by the terminal 800 in the foregoing embodiments of this application. For example, the processor 803 is further configured to perform the processing processes of the terminal device in the methods shown in FIG. 3 and FIG. 5 and/or another process of the technical solutions described in this application.

Further, the terminal device 800 may include a memory 804, and the memory 804 is configured to store program code and data of the terminal device 800.

Methods or algorithm steps described in combination with the content disclosed in the embodiments of this application may be implemented by hardware, or may be implemented by a processor by executing a software instruction. The software instruction may include a corresponding software module. The software module may be stored in a random access memory (Random Access Memory, RAM for short), a flash memory, a read-only memory (Read Only Memory, ROM), an erasable programmable read-only memory (Erasable Programmable ROM, EPROM), an electrically erasable programmable read-only memory (Electrically EPROM, EEPROM), a register, a hard disk, a mobile hard disk, a compact disc read-only memory (CD-ROM), or any other form of storage medium well-known in the art. For example, a storage medium is coupled to the processor, so that the processor can read information from the storage medium or write information into the storage medium. Certainly, the storage medium may also be a component of the processor. The processor and the storage medium may be located in an ASIC. In addition, the ASIC may be located in the DHCP server or the client. In addition, the ASIC may be located in a control plane entity of the centralized unit, a user plane entity of the centralized unit, the terminal device, or a unified data storage network element. Certainly, the processor and the storage medium may alternatively exist as discrete components in the control plane entity of a centralized unit, the user plane entity of a centralized unit, the terminal device, or the unified data storage network element.

A person skilled in the art should be aware that in the foregoing one or more examples, functions described in the embodiments of this application may be implemented by hardware, software, firmware, or any combination thereof. When the present invention is implemented by software, the foregoing functions may be stored in a computer-readable medium or transmitted as one or more instructions or code in the computer-readable medium. The computer-readable medium includes a computer storage medium and a communications medium, where the communications medium includes any medium that enables a computer program to be transmitted from one place to another. The storage medium may be any available medium accessible to a general-purpose or dedicated computer.

In the foregoing specific implementations, the objectives, technical solutions, and benefits of the embodiments of this application are further described in detail. It should be understood that the foregoing descriptions are merely specific implementations of the embodiments of this application, but are not intended to limit the protection scope of the embodiments of this application. Any modification, equivalent replacement, or improvement made based on technical solutions of the embodiments of this application shall fall within the protection scope of the embodiments of this application.

When the functions are implemented in the form of a software functional unit and sold or used as an independent product, the functions may be stored in a computer-readable storage medium. Based on such an understanding, the technical solutions of this application essentially, or the part contributing to the prior art, or some of the technical solutions may be implemented in a form of a software product. The software product is stored in a storage medium, and includes several instructions for instructing a computer device (which may be a personal computer, a server, or a network device) to perform all or some of the steps of the methods described in the embodiments of this application. The foregoing storage medium includes: any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communications method, comprising:
receiving (320), by a first access and mobility management function network element in a first communications network, a first message from a terminal device, wherein the first message comprises a non-access stratum NAS parameter used by the terminal device to access a second communications network;
sending (330), by the first access and mobility management function network element, a second message to a second access and mobility management function network element in the second communications network, wherein the second message comprises the NAS parameter;
wherein, if authentication between an authentication server in the second communications network and the terminal device succeeds, the method further comprises:
performing, by the first access and mobility management function network element, security protection on a first security mode command based on a key of the first communications network, wherein the first security mode command is used to enable security protection for message exchange between the terminal device and the first communications network; and
sending, by the first access and mobility management function network element to the terminal device, the first security mode command on which the security protection is performed;
wherein the method further comprises:
receiving, by the first access and mobility management function network element, a second security mode command from the second access and mobility management function network element, and sending the second security mode command to the terminal device, wherein the second security mode command is used to enable security protection for message exchange between the terminal device and the second communications network.

2. The method according to claim 1, wherein before the performing, by the first access and mobility management function network element, security protection on the first security mode command based on a key of the first communications network, the method further comprises:
receiving, by the first access and mobility management function network element, at least one of the following information from the second access and mobility management function network element or a security function entity:
the key; a parameter used to generate the key; and a base key used to generate the key.

3. The method according to claim 1 or 2, further comprising:
sending, by the first access and mobility management function network element to the terminal device, the parameter used to generate the key.

4. The communications method according to any one of claims 1 to 3, further comprising:
receiving (330), by the second access and mobility management function network element in the second communications network, the second message from the first access and mobility management function network element in the first communications network; and
processing (340), by the second access and mobility management function network element, the second message.

5. The method according to claim 4, further comprising:
sending, by the second access and mobility management function network element, a terminal authentication request to the authentication server in the second communications network based on the second message; and
receiving, by the second access and mobility management function network element, a terminal authentication response that corresponds to the terminal authentication request and that is sent by the authentication server, wherein the terminal authentication response comprises a result of authentication between the authentication server and the terminal device.

6. The method according to claim 5, wherein if the authentication between the authentication server in the second communications network and the terminal device succeeds, the method further comprises:
receiving, by the second access and mobility management function network element, at least one of the following information sent by the authentication server:
a key of the first communications network;
a parameter used to generate the key; and
a base key used to generate the key.

7. The method according to claim 5 or 6, wherein if the authentication between the authentication server and the terminal device succeeds, the method further comprises:
sending, by the second access and mobility management function network element, at least one of the following information to the first access and mobility management function network element:
the key of the first communications network;
the parameter used to generate the key; and
the base key used to generate the key.

8. The method according to claim 6 or 7, wherein the method further comprises:
sending, by the second access and mobility management function network element, a second security mode command to the first access and mobility management function network element, wherein the second security mode command is used to enable security protection for message exchange between the terminal device and the second communications network.

9. A communications method, comprising:
determining (310), by a terminal device, to access a second communications network through a first communications network;
sending (320), by the terminal device, a first message to a first access and mobility management function network element in the first communications network, wherein the first message comprises a non-access stratum NAS parameter used by the terminal device to access the second communications network; and
wherein, if authentication between an authentication server in the second communications network and the terminal device succeeds, the method further comprises:
receiving, by the terminal device, a first security mode command from the first access and mobility management function network element, wherein the first security mode command is used to enable security protection for message exchange between the terminal device and the first communications network, and the first security mode command is used to perform security protection by using a key of the first communications network;
wherein the method further comprises:
receiving, by the terminal device, a second security mode command from the first access and mobility management function network element, wherein the second security mode command is received by the first access and mobility management function network element from the second access and mobility management function network element, and the second security mode command is used to enable security protection for message exchange between the terminal device and the second communications network.

10. The method according to claim 9, further comprising:
receiving, by the terminal device from the first access and mobility management function network element, a parameter used to generate the key.

11. An apparatus comprising means for carrying out the steps performed by any one of the first and the second access and mobility management function network elements according to any one of claims 1 to 8 or a terminal according to any one of claims 9 and 10.

12. A computer-readable storage medium comprising instructions which, when executed by a computer, cause the computer to carry out the steps performed by any one of the first and the second access and mobility management function network elements according to any one of claims 1 to 8 or a terminal according to any one of claims 9 and 10.

13. A computer program product, comprising instructions, when being executed, cause an apparatus to carry out the steps performed by any one of the first and the second access and mobility management function network elements according to any one of claims 1 to 8 or a terminal according to any one of claims 9 and 10.

## Patentansprüche

1. Kommunikationsverfahren, umfassend:
Empfangen (320), durch ein erstes Zugriffs- und Mobilitätsverwaltungsfunktionsnetzelement in einem ersten Kommunikationsnetz, einer ersten Nachricht von einem Endgerät, wobei die erste Nachricht einen Nichtzugriffsschichtparameter, NAS-Parameter, umfasst, der von dem Endgerät dazu verwendet wird, auf ein zweites Kommunikationsnetz zuzugreifen;
Senden (330), durch das erste Zugriffs- und Mobilitätsverwaltungsfunktionsnetzelement, einer zweiten Nachricht an ein zweites Zugriffs- und Mobilitätsverwaltungsfunktionsnetzelement in dem zweiten Kommunikationsnetz, wobei die zweite Nachricht den NAS-Parameter umfasst;
wobei, wenn Authentifizierung zwischen einem Authentifizierungsserver in dem zweiten Kommunikationsnetz und dem Endgerät erfolgreich ist, das Verfahren ferner Folgendes umfasst:
Durchführen, durch das erste Zugriffs- und Mobilitätsverwaltungsfunktionsnetzelement, von Sicherheitsschutz eines ersten Sicherheitsmodusbefehls basierend auf einem Schlüssel des ersten Kommunikationsnetzes, wobei der erste Sicherheitsmodusbefehl dazu verwendet wird, Sicherheitsschutz für Nachrichtenaustausch zwischen dem Endgerät und dem ersten Kommunikationsnetz zu aktivieren; und Senden, durch das erste Zugriffs- und Mobilitätsverwaltungsfunktionsnetzelement an das Endgerät, des ersten Sicherheitsmodusbefehls, für den der Sicherheitsschutz durchgeführt wird;
wobei das Verfahren ferner Folgendes umfasst:
Empfangen, durch das erste Zugriffs- und Mobilitätsverwaltungsfunktionsnetzelement, eines zweiten Sicherheitsmodusbefehls von dem zweiten Zugriffs- und Mobilitätsverwaltungsfunktionsnetzelement und Senden des zweiten Sicherheitsmodusbefehls an das Endgerät, wobei der zweite Sicherheitsmodusbefehl dazu verwendet wird, Sicherheitsschutz für Nachrichtenaustausch zwischen dem Endgerät und dem zweiten Kommunikationsnetz zu aktivieren.

2. Verfahren nach Anspruch 1, wobei vor dem Durchführen, durch das erste Zugriffs- und Mobilitätsverwaltungsfunktionsnetzelement, von Sicherheitsschutz des ersten Sicherheitsmodusbefehls basierend auf einem Schlüssel des ersten Kommunikationsnetzes das Verfahren ferner Folgendes umfasst:
Empfangen, durch das erste Zugriffs- und Mobilitätsverwaltungsfunktionsnetzelement, mindestens einer der folgenden Informationen von dem zweiten Zugriffs- und Mobilitätsverwaltungsfunktionsnetzelement oder einer Sicherheitsfunktionseinheit:
des Schlüssels; eines Parameters, der dazu verwendet wird, den Schlüssel zu erzeugen; und eines Basisschlüssels, der dazu verwendet wird, den Schlüssel zu erzeugen.

3. Verfahren nach Anspruch 1 oder 2, ferner Folgendes umfassend:
Senden, durch das erste Zugriffs- und Mobilitätsverwaltungsfunktionsnetzelement an das Endgerät, des Parameters, der dazu verwendet wird, den Schlüssel zu erzeugen.

4. Kommunikationsverfahren nach einem der Ansprüche 1 bis 3, ferner umfassend:
Empfangen (330), durch das zweite Zugriffs- und Mobilitätsverwaltungsfunktionsnetzelement in dem zweiten Kommunikationsnetz, der zweiten Nachricht von dem ersten Zugriffs- und Mobilitätsverwaltungsfunktionsnetzelement in dem ersten Kommunikationsnetz; und
Verarbeiten (340), durch das zweite Zugriffs- und Mobilitätsverwaltungsfunktionsnetzelement, der zweiten Nachricht.

5. Verfahren nach Anspruch 4, ferner umfassend:
Senden, durch das zweite Zugriffs- und Mobilitätsverwaltungsfunktionsnetzelement, einer Endgeräteauthentifizierungsanforderung an den Authentifizierungsserver in dem zweiten Kommunikationsnetz basierend auf der zweiten Nachricht; und
Empfangen, durch das zweite Zugriffs- und Mobilitätsverwaltungsfunktionsnetzelement, einer Endgeräteauthentifizierungsantwort, die der Endgeräteauthentifizierungsanforderung entspricht und die durch den Authentifizierungsserver gesendet wird, wobei die Endgeräteauthentifizierungsantwort ein Ergebnis von Authentifizierung zwischen dem Authentifizierungsserver und dem Endgerät umfasst.

6. Verfahren nach Anspruch 5, wobei, wenn die Authentifizierung zwischen dem Authentifizierungsserver in dem zweiten Kommunikationsnetz und dem Endgerät erfolgreich ist, das Verfahren ferner Folgendes umfasst:
Empfangen, durch das zweite Zugriffs- und Mobilitätsverwaltungsfunktionsnetzelement, mindestens einer der folgenden Informationen, die durch den Authentifizierungsserver gesendet werden:
eines Schlüssels des ersten Kommunikationsnetzes;
eines Parameters, der dazu verwendet wird, den Schlüssel zu erzeugen; und
eines Basisschlüssels, der dazu verwendet wird, den Schlüssel zu erzeugen.

7. Verfahren nach Anspruch 5 oder 6, wobei, wenn die Authentifizierung zwischen dem Authentifizierungsserver und dem Endgerät erfolgreich ist, das Verfahren ferner Folgendes umfasst:
Senden, durch das zweite Zugriffs- und Mobilitätsverwaltungsfunktionsnetzelement, mindestens einer der folgenden Informationen an das erste Zugriffs- und Mobilitätsverwaltungsfunktionsnetzelement:
des Schlüssels des ersten Kommunikationsnetzes;
des Parameters, der dazu verwendet wird, den Schlüssel zu erzeugen; und
des Basisschlüssels, der dazu verwendet wird, den Schlüssel zu erzeugen.

8. Verfahren nach Anspruch 6 oder 7, wobei das Verfahren ferner Folgendes umfasst:
Senden, durch das zweite Zugriffs- und Mobilitätsverwaltungsfunktionsnetzelement, eines zweiten Sicherheitsmodusbefehls an das erste Zugriffs- und Mobilitätsverwaltungsfunktionsnetzelement, wobei der zweite Sicherheitsmodusbefehl dazu verwendet wird, Sicherheitsschutz für Nachrichtenaustausch zwischen dem Endgerät und dem zweiten Kommunikationsnetz zu aktivieren.

9. Kommunikationsverfahren, umfassend:
Bestimmen (310), durch ein Endgerät, über ein erstes Kommunikationsnetz auf ein zweites Kommunikationsnetz zuzugreifen;
Senden (320), durch das Endgerät, einer ersten Nachricht an ein erstes Zugriffs- und Mobilitätsverwaltungsfunktionsnetzelement in dem ersten Kommunikationsnetz, wobei die erste Nachricht einen Nichtzugriffsschichtparameter, NAS-Parameter, umfasst, der von dem Endgerät dazu verwendet wird, auf das zweite Kommunikationsnetz zuzugreifen; und
wobei, wenn Authentifizierung zwischen einem Authentifizierungsserver in dem zweiten Kommunikationsnetz und dem Endgerät erfolgreich ist, das Verfahren ferner Folgendes umfasst:
Empfangen, durch das Endgerät, eines ersten Sicherheitsmodusbefehls von dem ersten Zugriffs- und Mobilitätsverwaltungsfunktionsnetzelement, wobei der erste Sicherheitsmodusbefehl dazu verwendet wird, Sicherheitsschutz für Nachrichtenaustausch zwischen dem Endgerät und dem ersten Kommunikationsnetz zu aktivieren, und der erste Sicherheitsmodusbefehl dazu verwendet wird, Sicherheitsschutz durch Verwenden eines Schlüssels des ersten Kommunikationsnetzes durchzuführen;
wobei das Verfahren ferner Folgendes umfasst:
Empfangen, durch das Endgerät, eines zweiten Sicherheitsmodusbefehls von dem ersten Zugriffs- und Mobilitätsverwaltungsfunktionsnetzelement, wobei der zweite Sicherheitsmodusbefehl durch das erste Zugriffs- und Mobilitätsverwaltungsfunktionsnetzelement von dem zweiten Zugriffs- und Mobilitätsverwaltungsfunktionsnetzelement empfangen wird und der zweite Sicherheitsmodusbefehl dazu verwendet wird, Sicherheitsschutz für Nachrichtenaustausch zwischen dem Endgerät und dem zweiten Kommunikationsnetz zu aktivieren.

10. Verfahren nach Anspruch 9, ferner umfassend:
Empfangen, durch das Endgerät von dem ersten Zugriffs- und Mobilitätsverwaltungsfunktionsnetzelement, eines Parameters, der dazu verwendet wird, den Schlüssel zu erzeugen.

11. Vorrichtung, umfassend Mittel zum Ausführen der Schritte, die durch eines des ersten und des zweiten Zugriffs- und Mobilitätsverwaltungsfunktionsnetzelements nach einem der Ansprüche 1 bis 8 oder ein Endgerät nach einem der Ansprüche 9 und 10 durchgeführt werden.

12. Computerlesbares Speichermedium, umfassend Anweisungen, die, wenn sie durch einen Computer ausgeführt werden, den Computer dazu veranlassen, die Schritte auszuführen, die durch eines des ersten und des zweiten Zugriffs- und Mobilitätsverwaltungsfunktionsnetzelements nach einem der Ansprüche 1 bis 8 oder ein Endgerät nach einem der Ansprüche 9 und 10 durchgeführt werden.

13. Computerprogrammprodukt, umfassend Anweisungen, die, wenn sie ausgeführt werden, eine Vorrichtung dazu veranlassen, die Schritte auszuführen, die durch eines des ersten und des zweiten Zugriffs- und Mobilitätsverwaltungsfunktionsnetzelements nach einem der Ansprüche 1 bis 8 oder ein Endgerät nach einem der Ansprüche 9 und 10 durchgeführt werden.

## Revendications

1. Procédé de communication, comprenant :
la réception (320), par un premier élément de réseau à fonction de gestion d'accès et de mobilité dans un premier réseau de communication, d'un premier message provenant d'un dispositif terminal, dans lequel le premier message comprend un paramètre de strate de non-accès NAS utilisé par le dispositif terminal pour accéder à un second réseau de communication ;
l'envoi (330), par le premier élément de réseau à fonction de gestion d'accès et de mobilité, d'un second message à un second élément de réseau à fonction de gestion d'accès et de mobilité dans le second réseau de communication, dans lequel le second message comprend le paramètre NAS ;
dans lequel, si l'authentification entre un serveur d'authentification dans le second réseau de communication et le dispositif terminal réussit, le procédé comprend en outre :
l'exécution, par le premier élément de réseau à fonction de gestion d'accès et de mobilité, d'une protection de sécurité sur une première commande de mode de sécurité sur la base d'une clé du premier réseau de communication, dans lequel la première commande de mode de sécurité est utilisée pour permettre une protection de sécurité pour l'échange de messages entre le dispositif terminal et le premier réseau de communication ; et l'envoi, par le premier élément de réseau à fonction de gestion d'accès et de mobilité, au dispositif terminal, de la première commande de mode de sécurité sur laquelle la protection de sécurité est exécutée ;
dans lequel le procédé comprend en outre :
la réception, par le premier élément de réseau à fonction de gestion d'accès et de mobilité, d'une seconde commande de mode de sécurité provenant du second élément de réseau à fonction de gestion d'accès et de mobilité, et l'envoi de la seconde commande de mode de sécurité au dispositif terminal, dans lequel la seconde commande de mode de sécurité est utilisée pour permettre une protection de sécurité pour l'échange de messages entre le dispositif terminal et le second réseau de communication.

2. Procédé selon la revendication 1, dans lequel avant l'exécution, par le premier élément de réseau à fonction de gestion d'accès et de mobilité, d'une protection de sécurité sur la première commande de mode de sécurité sur la base d'une clé du premier réseau de communication, le procédé comprend en outre :
la réception, par le premier élément de réseau à fonction de gestion d'accès et de mobilité, d'au moins une des informations suivantes provenant du second élément de réseau à fonction de gestion d'accès et de mobilité ou d'une entité à fonction de sécurité :
la clé ; un paramètre utilisé pour générer la clé ; et une clé de base utilisée pour générer la clé.

3. Procédé selon la revendication 1 ou 2, comprenant en outre :
l'envoi, par le premier élément de réseau à fonction de gestion d'accès et de mobilité au dispositif terminal, du paramètre utilisé pour générer la clé.

4. Procédé de communication selon l'une quelconque des revendications 1 à 3, comprenant en outre :
la réception (330), par le second élément de réseau à fonction de gestion d'accès et de mobilité dans le second réseau de communication, du second message provenant du premier élément de réseau à fonction de gestion d'accès et de mobilité dans le premier réseau de communication ; et
le traitement (340), par le second élément de réseau à fonction de gestion d'accès et de mobilité, du second message.

5. Procédé selon la revendication 4, comprenant en outre :
l'envoi, par le second élément de réseau à fonction de gestion d'accès et de mobilité, d'une demande d'authentification de terminal au serveur d'authentification dans le second réseau de communication sur la base du second message ; et
la réception, par le second élément de réseau à fonction de gestion d'accès et de mobilité, d'une réponse d'authentification de terminal qui correspond à la demande d'authentification de terminal et qui est envoyée par le serveur d'authentification, dans lequel la réponse d'authentification de terminal comprend un résultat d'authentification entre le serveur d'authentification et le dispositif terminal.

6. Procédé selon la revendication 5, dans lequel si l'authentification entre le serveur d'authentification dans le second réseau de communication et le dispositif terminal réussit, le procédé comprend en outre :
la réception, par le second élément de réseau à fonction de gestion d'accès et de mobilité, d'au moins une des informations suivantes envoyées par le serveur d'authentification :
une clé du premier réseau de communication ;
un paramètre utilisé pour générer la clé ; et
une clé de base utilisée pour générer la clé.

7. Procédé selon la revendication 5 ou 6, dans lequel si l'authentification entre le serveur d'authentification et le dispositif terminal réussit, le procédé comprend en outre :
l'envoi, par le second élément de réseau à fonction de gestion d'accès et de mobilité, d'au moins une des informations suivantes au premier élément de réseau à fonction de gestion d'accès et de mobilité :
la clé du premier réseau de communication ;
le paramètre utilisé pour générer la clé ; et
la clé de base utilisée pour générer la clé.

8. Procédé selon la revendication 6 ou 7, dans lequel le procédé comprend en outre :
l'envoi, par le second élément de réseau à fonction de gestion d'accès et de mobilité, d'une seconde commande de mode de sécurité au premier élément de réseau à fonction de gestion d'accès et de mobilité, dans lequel la seconde commande de mode de sécurité est utilisée pour permettre une protection de sécurité pour l'échange de messages entre le dispositif terminal et le second réseau de communication.

9. Procédé de communication, comprenant :
la détermination (310), par un dispositif terminal, de l'accès à un second réseau de communication à travers un premier réseau de communication ;
l'envoi (320), par le dispositif terminal, d'un premier message à un premier élément de réseau à fonction de gestion d'accès et de mobilité dans le premier réseau de communication, dans lequel le premier message comprend un paramètre de strate de non-accès NAS utilisé par le dispositif terminal pour accéder au second réseau de communication ; et
dans lequel, si l'authentification entre un serveur d'authentification dans le second réseau de communication et le dispositif terminal réussit, le procédé comprend en outre :
la réception, par le dispositif terminal, d'une première commande de mode de sécurité provenant du premier élément de réseau à fonction de gestion d'accès et de mobilité, dans lequel la première commande de mode de sécurité est utilisée pour permettre une protection de sécurité pour l'échange de messages entre le dispositif terminal et le premier réseau de communication, et la première commande de mode de sécurité est utilisée pour exécuter une protection de sécurité à l'aide d'une clé du premier réseau de communication ;
dans lequel le procédé comprend en outre :
la réception, par le dispositif terminal, d'une seconde commande de mode de sécurité provenant du premier élément de réseau à fonction de gestion d'accès et de mobilité, dans lequel la seconde commande de mode de sécurité est reçue par le premier élément de réseau à fonction de gestion d'accès et de mobilité en provenance du second élément de réseau à fonction de gestion d'accès et de mobilité, et la seconde commande de mode de sécurité est utilisée pour permettre une protection de sécurité pour l'échange de messages entre le dispositif terminal et le second réseau de communication.

10. Procédé selon la revendication 9, comprenant en outre : la réception, par le dispositif terminal en provenance du premier élément de réseau à fonction de gestion d'accès et de mobilité, d'un paramètre utilisé pour générer la clé.

11. Appareil comprenant un moyen pour mettre en oeuvre les étapes exécutées par l'un quelconque des premier et second éléments de réseau à fonction de gestion d'accès et de mobilité selon l'une quelconque des revendications 1 à 8 ou un terminal selon l'une quelconque des revendications 9 et 10.

12. Support de stockage lisible par ordinateur comprenant des instructions qui, lorsqu'elles sont exécutées par un ordinateur, amènent l'ordinateur à mettre en oeuvre les étapes exécutées par l'un quelconque des premier et second éléments de réseau à fonction de gestion d'accès et de mobilité selon l'une quelconque des revendications 1 à 8 ou un terminal selon l'une quelconque des revendications 9 et 10.

13. Produit de programme informatique, comprenant des instructions, lorsqu'elles sont exécutées, amènent un appareil à mettre en oeuvre les étapes exécutées par l'un quelconque des premier et second éléments de réseau à fonction de gestion d'accès et de mobilité selon l'une quelconque des revendications 1 à 8 ou un terminal selon l'une quelconque des revendications 9 et 10.
